(19) Europäisches Patentamt
European Patent Office
Office européen des brevets

(11) **EP 1 883 193 A2**

(12) **EUROPEAN PATENT APPLICATION**

(43) Date of publication:
**30.01.2008 Bulletin 2008/05**

(51) Int Cl.:
**H04L 25/08** (2006.01)

(21) Application number: **07108560.9**

(22) Date of filing: **21.05.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **22.05.2006 US 419742**
**10.08.2006 US 463860**
**17.10.2006 US 550283**
**21.12.2006 US 614875**

(71) Applicant: **Edgewater Computer Systems, Inc.**
**Ottawa ON K2K 3G6 (CA)**

(72) Inventors:
• **Fanson, John**
**Ottawa Ontario K2H 8B3 (CA)**

• **Taylor, Doug**
**Kanata Ontario K2T 1H1 (CA)**
• **Price, George**
**White City Saskatchewan S0G 5B0 (CA)**
• **Esmailian, Tooraj**
**Folsom, CA 95630 (US)**
• **Hazy, Laszlo**
**Ottawa Ontario K2G 4L2 (CA)**
• **Wang, Yu**
**Kanata Ontario K2W 1E7 (CA)**

(74) Representative: **Harding, Richard Patrick et al**
**Marks & Clerk,**
**4220 Nash Court**
**Oxford Business Park South**
**Oxford OX4 2RU (GB)**

(54) **Data communication system**

(57) An interference cancellation system and method for a communication system comprising a data bus carrying primary signals having an A component and a non-A component are provided. The interference cancellation system has an input port, an A data extraction block and an interference cancellation circuit. The input port receives a sampled primary signal from the data bus, via an analog-front end block having sampling means. The A data extraction block extracts A data from the sampled primary signal and outputs A decoded data. The interference cancellation circuit has an interference measurement block and a cancellation block. The interference measurement block receives the A decoded data and the sampled primary signal and produces an A interference signal. The cancellation block receives the sampled primary signal and the A interference signal and subtracts the A interference signal from the sampled primary signal, producing an output signal with the A component substantially attenuated. Aspects of the invention also relate to the overlay scheme and a method of packet synchronization.

FIGURE 1

**Description**

FIELD OF THE INVENTION

This invention relates to a data communication system, and in particular to a data communication employing a databus carrying data encoded in accordance with a predefined signaling scheme.

Background of the Invention

The AS15531 databus, also known as MIL-STD-1553 or simply 1553, is an approximately 30 year old technology that defines the electrical and signaling characteristics for 1 Mbps communications over an asynchronous serial, command/response digital data bus on which messages are time division multiplexed among users. The transmission medium is a twisted wire cable pair. 1553 specifies all of the electrical characteristics of the receivers, transmitters, and cable used to implement the bus, as well as the complete message transmission protocol. 1553 is designed for high integrity message exchanges between unattended equipment.

The United States Department of Defense ("DoD") requires the use of 1553 as the standard for all inter and intra-subsystem communications on all military airplanes, helicopters, ships and land vehicles. Originally used only in mission avionics, 1553 is now used in flight critical avionics, flight control, weapons, electrical power control, and propulsion control. 1553 was originally published in 1973 for use on the F-16 military aircraft program. The current version of 1553 is MIL-STD-1553B ("1553b"), Notice 2, implemented in 1986.

MIL-STD-1553B utilizes an inefficient Manchester II bi-phase signaling scheme over shielded twisted pair cabling with no capacity for communicating faster than its base 1 Mbps rate.

On the other hand, Line Replaceable Units (LRUs) including state-of-the-art equipment devices and munitions, which are retrofitted to an airframe, often require high bandwidth data links between the new equipment to points in the airframe where control or monitoring is performed.

Furthermore, addition of new digital devices to an after market military or commercial aircraft, typically requires new bus wiring or an expanded load on the already heavily loaded aircraft wiring cockpit applications. The retrofitting of an aircraft to add new equipment by rewiring is not only a very complex process, which requires many months of modification time and involves substantial expenses, but also the new wiring adds weight to the aircraft and takes up space, which is always disadvantageous in any airframe design, especially for high performance airframes in which maneuverability is important.

The use of various technologies to increase the data transfer capacity of existing AS15531 networks without rewiring has been investigated by the Society of Automotive Engineers (SAE) Avionics Systems Subcommittee (AS-1A), in cooperation with SBS Technologies Inc. Results of their investigation are described in a white paper entitled "The Use of Discrete Multi-Tone (DMT) Signaling for Data Transmissions on Existing AS15531 Networks", published on 15 August 1998, which is incorporated herein by reference. The paper indicates that, Digital Subscriber Line (DSL) coding techniques, such as Carrier-less Amplitude/ Phase (CAP) coding and Orthogonal Frequency Division Multiplexing (OFDM), closely related to Discrete Multi-Tone (DMT) coding present themselves as particularly suitable examples of overlay technologies. This paper, however, fails to indicate the feasibility of an operable system that would allow existent 1553 networks to operate in their multi-drop, dual-redundant architecture, at a data transfer rate above 1 Mbps and signaling frequencies above approximately 10MHz.

In serial data transmission, synchronization processes ensure that a receiving end recognizes symbols in the order in which the transmitting end has sent them, and can determine where one symbol ends and the next begins. Synchronization processes include clock synchronization, symbol synchronization when the symbol rate is different than the clock rate, frame synchronization when a frame contains several symbols, and all rely on clocking mechanisms to synchronize the signals between the sending and receiving machines. Synchronization can also refer to other aspects of a data signal in connection with the ability of a terminal to interpret this data signal, such as frequency, amplitude, phase, etc.

Typically, for a circuit switched network, clock synchronization and symbol synchronization are generally determined at the configuration of the circuit and maintained for the duration of the connection. However, in general, for packet switched networks there are no dedicated paths, and packets may arrive at a receiving end from any other terminal at any given reference point, with respect to an internal reference system of the receiving end. Specifically, interpretation of a received packet with respect to an internal timing reference system of the receiving end is currently a complex aspect to tackle. The arrival time of packets is generally not known at the receiving end prior to the arrival of the packet, especially at a timing resolution less than the duration of a symbol used for signaling. Therefore, clock and symbol synchronization for packet switched networks are generally more complex and/or less accurate than in the circuit switched networks. Multiple access systems such as Time Division Multiple Access (TDMA) where the network is generally shared and there is typically an unknown time delay between terminals, or wireless networks with channel fading conditions or communications over power line channels where a light has been switched on, present especially difficult challenges in achieving synchronization.

Since packets generally arrive at the receiving end at unknown times with respect to an internal reference timing system, traditionally, in packet switched network, frame synchronization is performed for every incoming frame of information at a receiver terminal. A correlation receiver may be used, for example, to detect sync symbols within the preamble of incoming packets, in order to detect packets. Decoding of the actual data, within packets, would follow the detection of the preamble. This approach presents several drawbacks: firstly, preamble detection and alignment of sync symbols with an internal clock involves complex computations, therefore requiring such computations for every incoming packet results in more complex hardware requirements. Secondly, the sync symbols detection and the decoding of the data part are carried within a single frame, for each frame, which can lead to either accuracy issues for frames with a preamble of a shorter duration, or to timing and bandwidth constraints when a longer duration preamble is used.

Summary of the Invention

According to one aspect of the invention there is provided an interference cancellation system for use within a communication system wherein a data bus carries primary signals having a first component encoded in accordance with a first signaling scheme and a second component encoded in accordance with a second signaling scheme, comprising an input port for receiving a sampled primary signal from the data bus; a data extraction block connected to said input port, for extracting from said sampled primary signal data encoded in accordance with said first signaling scheme and for outputting said data in decoded form; and an interference cancellation circuit comprising: an interference measurement block for receiving said decoded data and said sampled primary signal and for producing an interference signal; and a cancellation block for subtracting said interference signal from the sampled primary signal to produce an output signal.

According to another aspect of the invention there is provided a method of canceling interference signals wherein data encoded in accordance with a first signaling scheme is overlaid on data encoded in accordance with a second signaling scheme, comprising acquiring from a data bus a sampled primary signal, the sampled primary signal comprising data encoded in accordance with said first and second signaling schemes; decoding the data encoded according to said first signaling scheme within the sampled primary signal to produce a decoded data; producing a variant of an interfering signal based on the decoded data and based on the sampled primary signal using an impulse response modeling technique; and subtracting the variant of said interfering signal from the sampled primary signal and producing an output signal with a substantially attenuated component from said first signaling scheme.

More generally, the invention provides a 1553 communication system having a primary bus and a redundant bus, comprising a non-1553 data communications overlay system. The non-1553 data communication overlay system has a non-1553 bus controller terminal and a non-1553 remote terminal. Each non-1553 terminal includes a non-1553 transmitter block, a non-1553 receiver block and a non-1553 receive path selection block. The non-1553 transmitter block is connected to the primary bus and the redundant bus and sends non-1553 signals on these buses. The non-1553 receiver block receives non-1553 signals from one of the buses on a receive path selected by the non-1553 receive path selection block. The non-1553 receive path is selectively established between the primary data bus or the redundant data bus and the non-1553 receiver block according to predefined receive path selection criteria. According to further embodiments, the receive path selection criteria may include monitoring performance metrics for bus conditions such as Bit Error Rate (BER), Signal to Noise Ratio (SNR), channel capacity. Such metrics could be monitored periodically, as well as averaged over appropriate time intervals, according to specific system topologies and communication requirements.

Furthermore, a communication method over a 1553 communication networks is provided. The method comprises the steps of transmitting 1553 signals on a primary bus or on a redundant bus according to a 1553 bus fault design and receiving 1553 signals from the primary and redundant buses. The method further comprises the step of transmitting non-1553 signals over the primary bus and over the redundant bus and the step of selecting a non-1553 receive path between either the primary bus or the redundant bus an a non-1553 receiver. The method also comprises the step of receiving non-1553 signals on the selected receive path. The receive path selection is based on predefined receive path selection criteria.

1553 signals are defined as signals in accordance with 1553 standard signaling schemes, including but not limited to primitive Manchester II bi-phase signaling. Non-1553 signals are defined as any signals that can be differentiated from 1553 signals either in frequency domain, time domain, Laplace domain, or by any other method obvious in the art.

In another aspect the invention provides a 1553 interference cancellation system and method for non-1553 data communications over a 1553 data communication system. Essentially, the interference cancellation system has an input port, a 1553 data extraction block and an interference cancellation circuit. The input port receives a sampled primary signal from the data bus, via an analog-front end block with sampling means. The 1553 data extraction block is connected to the input port and extracts 1553 data from the sampled primary signal and outputs 1553 decoded data.

The interference cancellation circuit has an interference measurement block and a cancellation block. The interference measurements block receives the 1553 decoded data and the sampled primary signal and produces an interference signal. The cancellation block subtracts the interference signal from the sampled primary signal and produces an output signal with a substantially canceled 1553 component.

In yet another aspect, a method of canceling 1553 interference on non-1553 communication within a 1553 communication system is provided. The method comprises an initial step of acquiring from a data bus a sampled primary signal, where the sampled primary signal comprising non-1553 encoded data and 1553 encoded data. Next, 1553 encoded data within the sampled primary signal is decoded to produce a decoded 1553 data. Afterwards, a variant of an interfering signal is produced based on the decoded 1553 data and based on the sampled primary signal. Finally, the variant of the interfering signal is subtracted from the sampled primary signal to produce an output signal with a substantially canceled 1553 component.

Advantageously, the system and method according to invention allow for increased data throughput through a 1553 communication system with a non-1553 system overlay.

In a still further aspect the invention provides an interference cancellation (IC) system for use within a 1553 communication system comprising a data bus carrying primary signals having a 1553 component and a non-1553 component is provided. The IC system has an input port, a 1553 data extraction block and an interference cancellation circuit. The input port receives a sampled primary signal from the data bus, via an analog-front end block having sampling means. The 1553 data extraction block extracts 1553 data from the sampled primary signal and produces 1553 decoded data. The interference cancellation circuit has an interference measurement and a cancellation block. The interference measurement block receives the 1553 decoded data and the sampled primary signal, and within an impulse response block , produces an interference signal based on a 1553 impulse response system mode. The cancellation block subtracts the interference signal from the sampled primary signal and produces an output signal with the 1553 component substantially cancelled.

Furthermore, an IC system using adaptive filtering techniques within the impulse response block is provided. According to an embodiment of the invention, the Least Mean Squares (LMS) algorithm is used as an adaptive filter technique.

Even further, an IC system obtaining impulse response coefficients based on accumulated basis functions is provided.

An impulse response system and method based on accumulated basis functions are also provided. The impulse response system has an accumulated basis function block and an impulse response block using impulse response coefficients based on the accumulated basis functions.

Furthermore, a method of canceling 1553 interference on non-1553 communication within a 1553 communication system is provided. The method comprises an initial step of acquiring from a data bus a sampled primary signal, where the sampled primary signal comprises non-1553 encoded data and 1553 encoded data. Next, 1553 encoded data within the sampled primary signal is decoded to produce a decoded 1553 data. Afterwards, a variant of an interfering signal is produced based on the decoded 1553 data and based on the sampled primary signal using an impulse response modeling technique. Finally, the variant of the interfering signal is subtracted from the sampled primary signal to produce an output signal with a substantially canceled 1553 component.

In still another aspect the invention relates to a synchronization system comprising a transmitter-identification system, a packet-boundary detection system and a storage-access system. The transmitter-identification system enables each receiving terminal within the network to know the identity of the originating transmitter terminal for a given packet of information, prior to the reception of this packet of information. The packet-boundary detection system enables detection of packet synchronization parameters for all transmitter-receiver pairs of terminals within the network. The storage-access system stores the detected packet synchronization parameters and allows the receiver within the corresponding transmitter-receiver pair to access the packet synchronization parameters.

Furthermore, a method of packet synchronization within a packet-switched communication network comprising a plurality of terminals is provided.

According to one embodiment of the invention, the method comprises the step of detecting synchronization parameters and, for a given receiver terminal, establishing the identity of the originating transmitter for an incoming packet of information, accessing synchronization parameters corresponding to the identified transmitter, adjusting receiver based on accessed synchronization parameters and decoding the incoming packet of information.

According to an alternate embodiment, at a given receiver terminal within the network, the method of packet synchronization comprises the first step of establishing the identity of the originating transmitter for an incoming packet of information. Subsequently, if synchronization parameters corresponding to the identified transmitter are available, they are accessed and the receiver is adjusted based on thus enabling decoding of the incoming packet of information.

If synchronization parameters corresponding to the identified transmitter are not available, they are detected, calculated or estimated and stored.

Brief Description of Drawings

The following detailed description, given by way of example and not intended to limit the present invention solely thereto, will best be appreciated in conjunction with the accompanying drawings, wherein like reference numerals denote like elements and parts, where:

FIG. 1 is a block diagram of a 1553 communication system according to an embodiment of the invention;

FIG. 2 is a block diagram of a non-1553 terminal for a 1553 communication system according to an embodiment of the invention;

FIG. 3 is a flow chart of a method of selecting a receive path for non-1553 signals within a 1553 communication system in accordance with an embodiment of the invention;

FIG. 4 is a block diagram of a 1553 communication system, according to a preferred embodiment of the invention;

FIG. 5 is a block diagram of a 1553b terminal, used within the system shown in FIG. 4;

FIG. 6 is a block diagram of an OFDM terminal used within the system shown in FIG. 4;

FIG. 7 illustrates a theoretical Power Spectral Density (PSD) plot of an OFDM signal and a 1553b signal within a 1553b communication system in accordance with an embodiment of the invention;

FIG. 8 is a Power Spectral Density (PSD) plot of an OFDM signal and a 1553b signal within a particular 1553b communication system in accordance with an embodiment of the invention;

FIG. 9 illustrates a theoretical Power Spectral Density (PSD) plot of a primary signal comprising an OFDM component and a 1553 component within a 1553 communication system.

FIG. 10 is a block diagram of an interference cancellation system according to the invention;

FIG. 11 is a block diagram of an interference cancellation system according to the preferred embodiment of the invention;

FIGS. 12A, 12B, 12C and 12D are waveform representations of signals within the system of FIG. 3;

FIG. 13 is waveform representation of a typical 1553 word according to the 1553b standard;

FIG. 14 is a block diagram of a 1553 receiver within the interference cancellation system in FIG. 3;

FIG. 15A, 15B illustrate transmitted (Manchester II encoded) [0 0 0] and [0 0 1] 1553 Basis Functions;

FIG. 15C illustrates a [0 0 0] 1553 Basis Function extracted from a band-pass filtered second sampled primary signal;

FIG. 16 is a block diagram of a 1553 Interference Canceller block based on a direct Basis Function method, according to the preferred embodiment of the invention;

FIG. 17 is a block diagram of an Interference Cancellation system according to the invention, operating in conjunction with a non-1553 receiver in a dual redundant scheme.

FIGs. 18A, 18B, 18C are block diagram of an interference cancellation system based on an impulse response method using an Least Mean Square (LMS) adaptive filter, in accordance with embodiments of the invention;

FIG. 19 illustrates impulse signal sequences used within the generate reference blocks of the systems in FIGs. 18A, 18B, 18C, according to an embodiment of the invention;

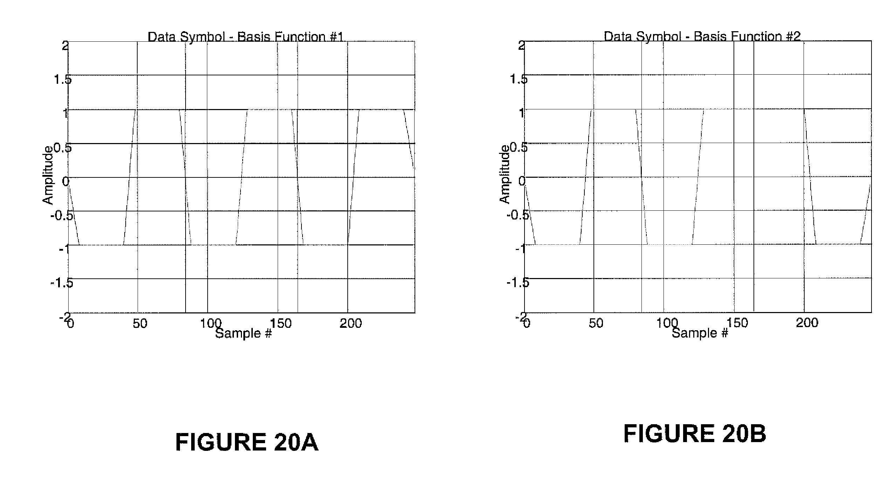

FIG. 20A, 20B illustrate transmitted (Manchester II encoded) [0 0 0] and [0 0 1] 1553 Basis Functions;

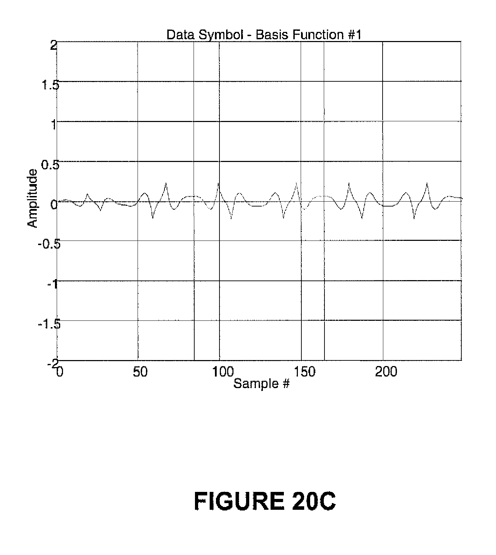

FIG. 20C illustrates a received band-pass filtered (Manchester II encoded) [0 0 0] 1553 Basis Function;

FIG. 21 is a block diagram of an interference cancellation system based on an impulse response method using Basis Functions, in accordance with a preferred embodiment of the invention;

FIG. 22 illustrates impulse signal sequences used within the generate reference blocks of the systems in FIG. 21 according to an embodiment of the invention;

FIGS. 23A, 23B and 23C illustrate signals used in modeling a 1553 transmitter within the IR block in FIGs.21; In particular, FIG. 23A illustrates a reference signal constructed based on special impulse sequences in FIG. 22;

FIGS. 24A, 24B and 24C illustrates alternate signals used in modeling a 1553 transmitter within the IR block in FIGs.21; In particular, FIG. 24A illustrates a reference signal constructed based on special impulse sequences in FIG. 19;

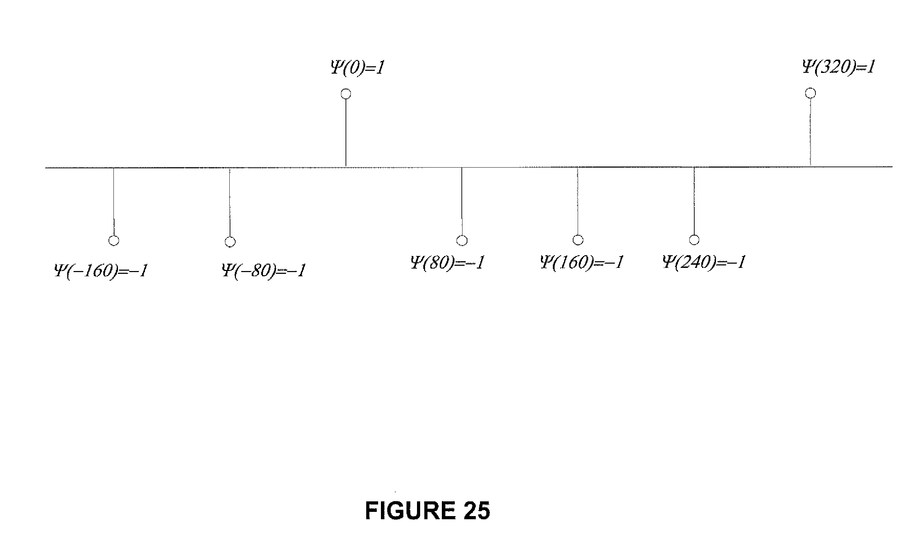

FIG. 25 illustrates a $\psi$ series used in a circular convolution implementation of the Extract IR coefficients block for the system in FIG. 21;

FIG. 26 is a block diagram of a packet switched network comprising a synchronization system according to an embodiment of the invention;

FIG. 27 illustrates the communication among various blocks of a synchronization system according to an embodiment of the invention, with respect to a receiving terminal within a packet switched network;

FIGs 28A and 28B are flow charts of a method of packet synchronization according to two alternate embodiments of the invention;

FIG. 29A is a block diagram of a packet switched network comprising a synchronization system according to the preferred embodiment of the invention;

FIG. 29B illustrates a packet of information as used in conjunction with the preferred embodiments of the invention;

FIG. 29C illustrates a Superframe as used as used in conjunction with the preferred embodiments of the invention;

FIG. 30A illustrates a packet-switched network comprising a Bus Controller and two Remote Terminals, RT1 and RT2, according to the preferred embodiment of the invention; illustrating propagation delays between terminals;

FIG. 30B illustrates the timing view at the receivers of BC, RT1 and RT2 associated with the network in FIG. 30A.

Detailed Description of the Invention

In the following detailed description, numerous specific details are set forth in order to provide a thorough understanding of the invention. However, it will be understood by those skilled in the art that the present invention may be practiced without these specific details. In other instances, well-known methods, procedures, components and circuits have not been described in detail so as not to obscure the present invention.

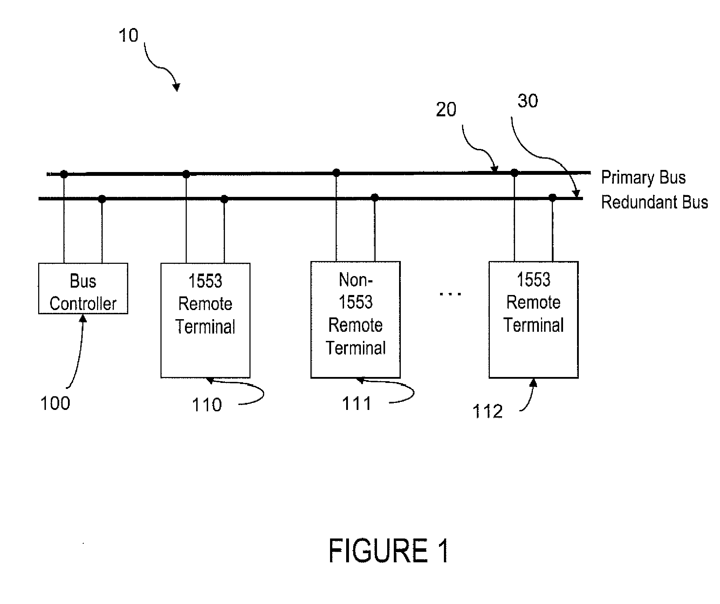

Reference is made now to FIG. 1, illustrating a 1553 communication system 10 according to the invention. System 10 comprises a primary data bus 20 and a redundant data bus 30, a Bus Controller (BC) terminal 100 and a plurality of Remote Terminals (RT) 110, 111, 112. 1553 compatible devices are in most cases analog, so in general, each of the Remote Terminals includes a transceiver which converts the binary bit streams on buses 20, 30 to analog signals. The Remote Terminals also comprise encoder/decoder equipment and protocol controllers, as well as other necessary components to interface to any higher layer sub-systems. The Bus Controller 100 is a terminal consisting of a superset of the capabilities of the Remote Terminals 110, 111, 112, acting as the media access controller (MAC) to the buses 20, 30, utilizing a command/response protocol. In embodiments of the invention operable in accordance with the 1553 standard, only the Bus Controller 100 can issue a command on the buses while Remote Terminals only respond to a command received from the Bus Controller 100.

Within the 1553 communication systems 10, Remote Terminal 110, 112 are capable of sending and receiving 1553 signals over the primary and redundant buses 20, 30, whereas Remote Terminal 111 is capable of sending and receiving non-1553 signals. Furthermore, BC 100 is capable of sending both 1553 and non-1553 signals. 1553 signals are defined herein as signals in accordance with 1553 standard signaling schemes, including but not limited to primitive Manchester II bi-phase signaling. Non-1553 signals are any signals that can be differentiated from 1553 signals either in frequency domain, time domain, Laplace domain, or by any other method obvious in the art. Non-1553 signals must be generated so as to enable co-propagation with 1553 signals through an existing 1553 system along the primary and secondary buses 20, 30. Preferably, when co-propagating non-1553 signals, impact to the transmission of the 1553 signals is minimal. Without limitation, Digital Subscriber Line (DSL) code gain methods such as Carrier-less Amplitude/ Phase (CAP) coding and Orthogonal Frequency Division Multiplexing (OFDM), closely related to Discrete Multi-Tone (DMT) coding are particular examples of possible non-1553 signals.

Terminals capable of either sending or receiving non-1553 signals, such as 111, are defined herein as non-1553 terminals or non-1553 communication devices. Likewise, terminals capable of receiving 1553 signals, such as 110 and 112, are defined herein as 1553 terminals or 1553 communication devices. It will be recognized by those skilled in the art that 1553 terminals and non-1553 terminals as defined herein are differentiated by their functionality and signaling capabilities, but their implementation may take various forms. Physically, they might be integrated on the same IC or be built on different boards, but also they might occur at different physical locations, all according to requirements of the communication system and to manufacturing preferences. In an alternate embodiment, two distinct BC terminals, one controlling 1553 RT's and the other controlling the non-1553 RT's, might be provided.

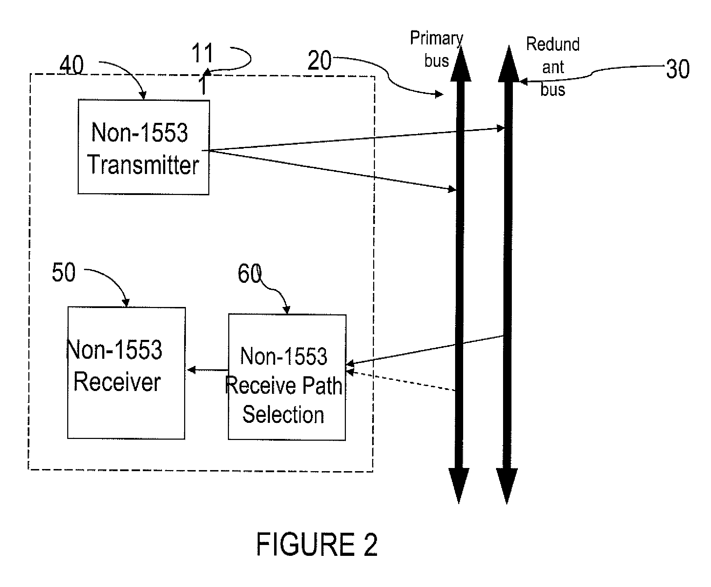

Referring now to FIG. 2, a non-1553 terminal 111 according to an embodiment of the invention is illustrated. The non-1553 terminal 111 comprises a non-1553 transmitter block 40 connected to the primary bus 20 and the redundant bus 30 of a 1553 communication system, for sending non-1553 signals on these buses. The non-1553 terminal 111 also comprises a non-1553 receiver block 50 for receiving non-1553 signals via a receive path to be established with one of the primary bus 20 and the redundant bus 30, by a non-1553 Receive Path Selection block 60. As it will be recognized by someone skilled in the art, the non-1553 Receive Path Selection block 60 comprises means for selecting one of the data buses based on a predefined receive path selection criteria, as well as means for establishing a connection, such as, but not limited to, an electrical connection, between the selected bus and the non-1553 receiver block 50. Predefined receive path selection criteria of selecting a non-1553 receive path are defined herein as any design criteria aimed at indicating the appropriate receive path, from a plurality of data buses to a non-1553 receiver.

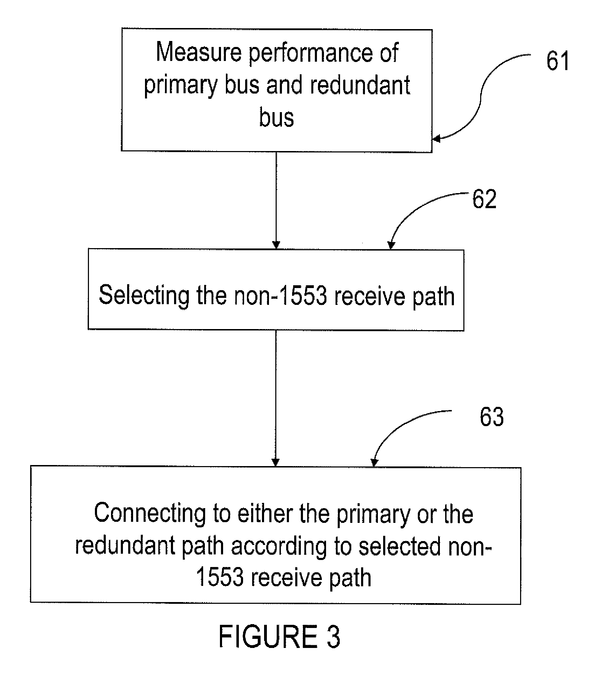

FIG. 3 illustrates the flowchart of a method of receiving non-1553 signals within the 1553 communications system 10, according to an embodiment of the invention. According to this embodiment, the method comprises the step of monitoring the performance of the primary bus 20 and of the redundant bus 30, as shown at 61. Preferably, the monitoring step is performed periodically, based on metrics that may include, without limitation, Signal to Noise Ratio (SNR), Bit Error Rate (BER), channel capacity etc. Based on the values obtained during the monitoring step, preferably averaged over appropriate time intervals, a selection of an appropriate receive path, from the primary bus to the receiver or from the redundant path to the receiver, as shown at 62, is made. Finally, once a receive path is selected, the connection between the corresponding bus and the non-1553 receiver is established, step 63, allowing for non-1553 signals to be received at the non-1553 receiver 50.

According to a preferred embodiment, the higher performance bus will be selected as the bus from which to receive signals. For example, under no-bus fault conditions, 1553 signals might be transmitted on the primary bus, leaving the redundant bus available for unfettered transmission of non-1553 signals. When the same bus must be used for both 1553 and non-1553 signals, a multiplexing scheme such as Time Division Multiplexing might be used, although this may not be necessary.

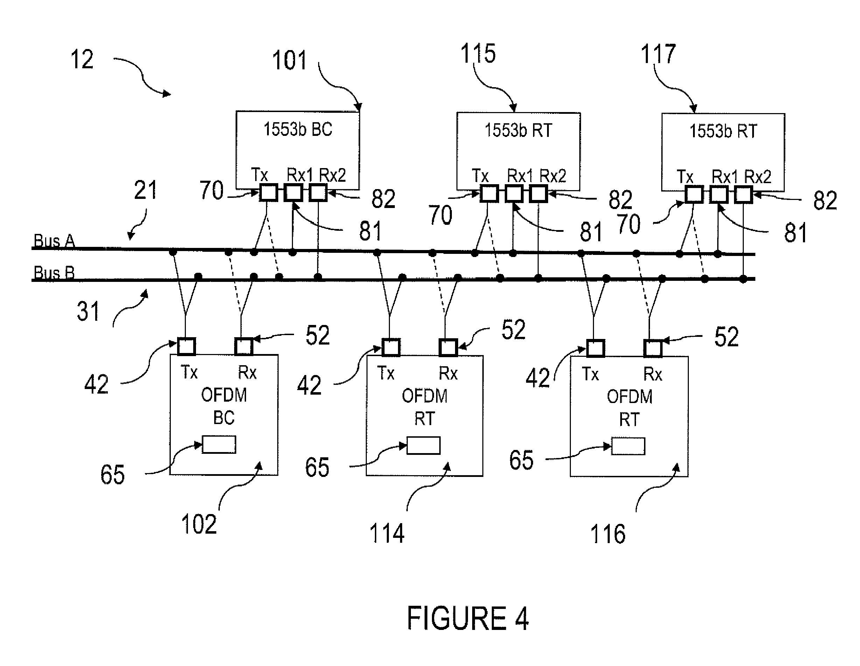

FIG. 4 illustrates a 1553b communications system 12 according to a preferred embodiment of the invention. The 1553b communication system 12 is built and operates in accordance to the 1553b standard. The 1553b communication system 12 comprises a primary bus (Bus A) 21 and a redundant bus (Bus B) 31, a 1553b Bus Controller (BC) 101 and a plurality of 1553b Remote Terminals (RT) 115, 117 exchanging 1553b signals along buses 21, 31. In addition, the 1553b system 12 comprises an OFDM Bus Controller 102 and a plurality of OFDM Remote Terminals 114, 116.

Each 1553b terminal comprises a 1553b Transmitter 70, connecting via a switch to either the primary bus 21 or the redundant bus 31, and a couple of 1553b receivers 81, 82. Each OFDM terminal comprises an OFDM Transmitter 42, connected to the primary bus 21 and to the redundant bus 31, and an OFDM receiver 52 that can connect via a switch to either bus.

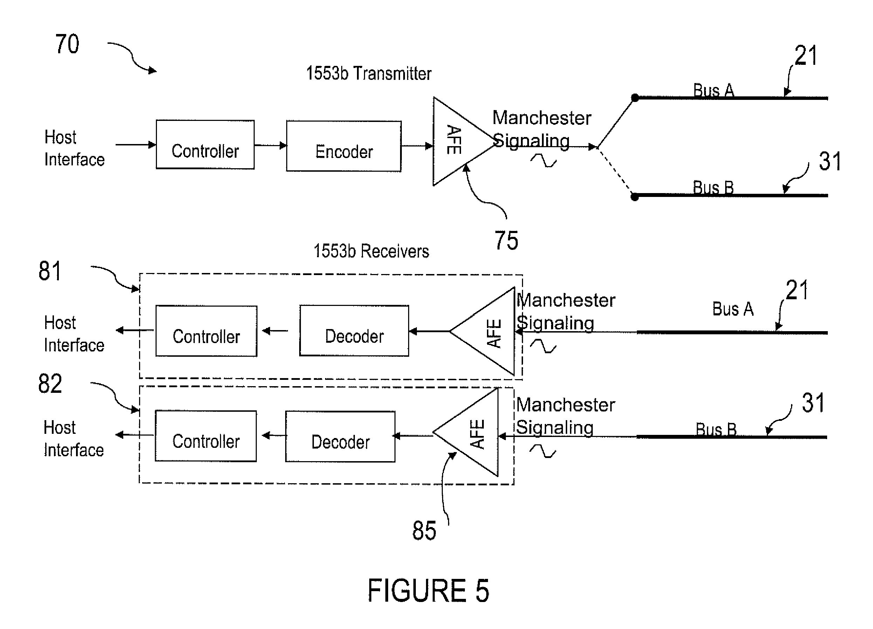

FIG. 5 shows a detailed block diagram of a 1553b terminal in the 1553b system 12. The 1553b transmitter 70 comprises a controller block, an encoder, and an analog front end (AFE) block, containing all the circuitry for filtering, for converting the signal from digital to analog and for coupling the signal to the primary bus (Bus A) or the redundant bus (Bus B) via a switch. Each 1553b receiver 81, 82 comprises an AFE block performing necessary filtering and conversion from analog to digital, a decoder block, and a controller block.

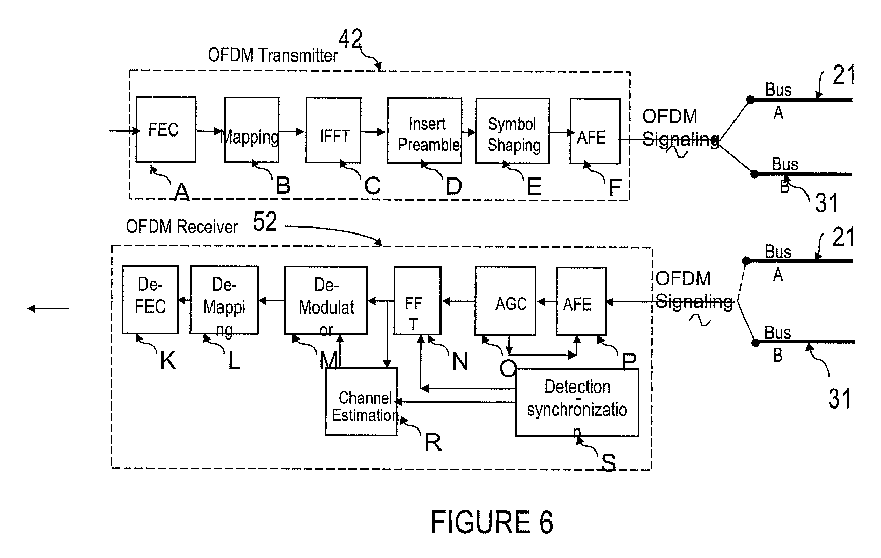

FIG. 6 illustrates an OFDM terminal according to a preferred embodiment of the invention. The OFDM Transmitter 42 includes a forward error correction (FEC) unit A for adding FEC bits to an input data bit stream. Forward Error Correction (FEC) may consist of Reed-Solomon, convolutional or other types of coding schemes that will be recognized by someone skilled in the art. The FEC unit A is followed by a mapping block B which maps the encoded bits to frequency domain sub-carriers, which are then transformed to a time domain digital signal (symbol) by an inverse Fast Fourier Transform (IFFT) unit C, which will be recognized by those skilled in the art as means for an efficient implementation of the inverse discrete Fourier Transform (DFT) algorithm. Preferably, the number of bits that are allocated to particular tones is chosen to match the signal to noise conditions of the channel.

The symbols are then received by a preamble unit D, which pre-pends to them *a preamble,* consisting of a number of synchronization symbols. The preamble allows for synchronization of the transmitted waveform at the receiver, as well as to enable analog gain control (AGC) and channel response estimation. Furthermore, a *cyclic prefix* is also usually added to the OFDM symbols. Next, the symbols are appropriately shaped by a symbol shaper E before conversion to an analog signal by the analog front end (AFE) F. The symbol shaping may include operations such as widowing and filtering. Following, the OFDM symbols represented as digital signals are converted to analog signals by the analog front end (AFE) F, comprising a digital to analog converter and appropriate analog filters. The AFE may further include an IF/RF mixing stage to convert the signal to higher frequencies.

The OFDM Receiver 52 selects the analog signal from the primary bus 21 or redundant bus 31, as discussed above. Then, the appropriate RF/IF stages are used to convert the signal to a baseband signal which is then filtered and converted from the analog domain to a digital signal by an analog front end (AFE) which includes an analog to digital converter P. An Automatic Gain Control block (AGC) O controls the input signal level based on power metrics estimated from the synchronization symbols. A Fast Fourier Transform (FFT) is applied to the sampled signal by an FFT block N, preferably with the timing of the FFT based on the detection and timing estimation of the synchronization symbols performed by a Detection Synchronization block S. Channel estimation is achieved based on the synchronization symbols and is used by a De-Modulator M to remove phase and amplitude distortion effects of the channel. Channel equalization is next performed in the frequency domain. A De-Mapping function L converts the demodulated frequency domain sub-carriers to coded data bits, followed by the corresponding forward error correction block R to correct any bit errors (if correctable). The decoded data bits are passed to higher communications layers.

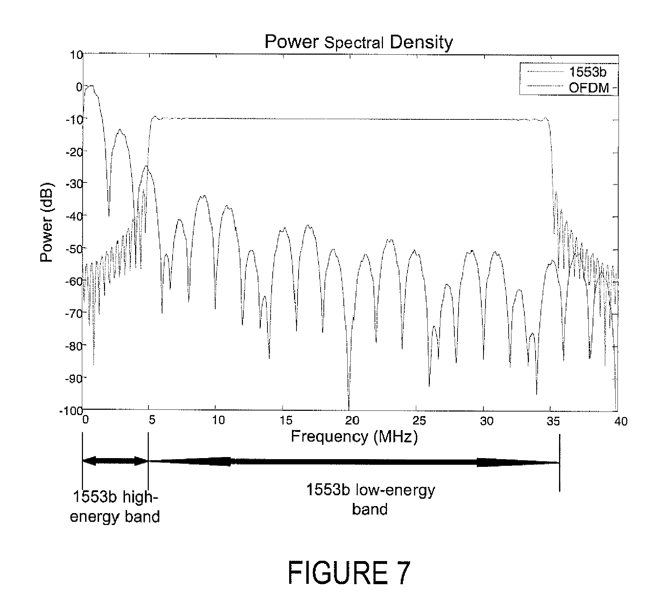

According to the preferred embodiment of the invention, OFDM modulation is used to better utilize the available bandwidth on the bus, creating an "overlay" network to operate concurrently and without disturbing existing 1553b communications. This is accomplished by utilizing OFDM signals with little energy (low PSD) in a 1553b high-energy frequency band and with a relatively constant Power Spectral Density (PSD) in 1553b low-energy frequency band. FIG. 7 is a theoretical representation of the PSD of a transmitted OFDM signal relative to a 1553b transmitted waveform. As illustrated, the OFDM waveforms are configured to utilize the frequency band from 5 to 35 MHz where 1553b side lobes of a given 1553b system are relatively low. In addition, the OFDM signals have little energy in the 0 to 5 MHz band. Therefore, interference between OFDM communications and existing 1553b communications is minimized. Alternate embodiments contemplate configuration of OFDM signals with different frequency bands, including an OFDM waveform configured to utilized the frequency band from about 5MHz to a frequency greater than 35MHz, such as 40MHz.

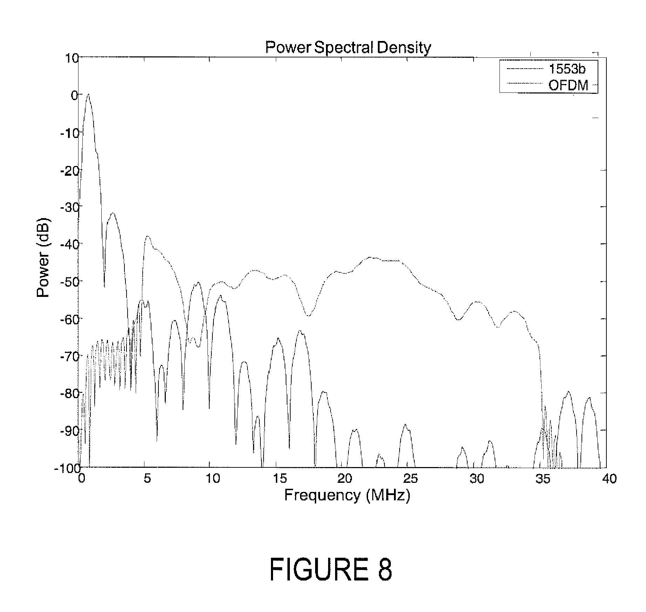

FIG. 8 illustrates representative PSD's at a receiver of both a 1553b signal and OFDM signal for a particular bus configuration. In this example, the Signal to Noise Ratio (SNR) has an acceptable level in the frequency band below 5 MHz for a 1553b receiver to decode the 1553b signal. As well, the SNR has an acceptable level in the frequency band above 5 MHz for an OFDM receiver to decode the OFDM signal. It will be understood by those skilled in the art of data communications that the frequency and bandwidth of the OFDM communications devices can be chosen to match the channel conditions of a given 1553b bus to ensure reliable communications for both 1553b and OFDM systems.

When both 1553b and OFDM signals are transmitted on the same bus, relative powers at a receiver would depend on the network topology and the particular locations of transmitters and receivers. A network of this topology and components is generally frequency selective in nature. A transceiver is generally transformer coupled to the bus stub (cable connection to the main bus) and the connecting stubs can be either transformer coupled or direct coupled using isolation resistors only to the main bus.

Referring back to FIG. 4, bus fault design is herein defined as predefined operation of the communication system in the event of bus faults. Examples of bus faults include, without limitation, a broken wire or connector or an issue with a terminal itself. A dual redundant scheme of 1553b communication over system 12 is as follows: 1553b devices transmit on Bus A under no bus fault conditions and receive from both Bus A and Bus B. Each OFDM device transmits the same signal on both Bus A and Bus B and receives on Bus B under no bus fault conditions. When bus faults occur on Bus A 1553b devices will switch to Bus B for transmission, under BC control. In most 1553b applications, a bus fault is determined on a terminal by terminal basis; however, other bus fault detection designs are not excluded. When the 1553b BC 101 detects that one of the 1553b RT's does not respond on the primary bus 21, it re-sends the command to that RT to transmit on the redundant bus 31. Occasionally, the 1553b BC may also send a command on the redundant bus 31 to test the integrity of the wire.

In order to select a receive path, the OFDM receiver 52 of the OFDM device 114, while connected to the secondary (redundant) bus 31, periodically monitors the secondary bus for performance via non-1553 receive path selection unit 65. The monitoring is performed based on a predefined design scheme or predefined selection criteria, specifying acceptable performance level for selected metrics. The metrics used for this determination can include but are not limited to SNR, Bit Error Rate and capacity. The metrics could be monitored and averaged over an appropriate time interval. Detection of performance of the redundant bus below acceptable levels, triggers switching the connection of OFDM receiver 52 from the secondary bus 31 to the primary bus 21, thus establishing an alternate receive path. Switching to the other bus could also be initiated by failing to decode a message on the currently connected bus. Alternately, both buses could be monitored at the same time, and a receive path between the better performing bus and the receiver could be established accordingly, as described earlier in reference to FIG. 3 (see step 61).

In summary, embodiments of the present invention allow for an overlay of a non-1553 communication scheme over legacy 1553 systems, with minimal impact to the 1553 communications, thereby providing the ability of enhancing the throughput of existent 1553 systems and of adding new digital equipment, without rewiring.

Furthermore, a dual-redundant scheme employing a single non-1553 transmitter and single non-1553 receiver per non-1553 transceiver is presented. Therefore, additional benefits compared to 1553b dual redundancy architecture include lower power, smaller size, less heat dissipation requirements and lower design complexity. It will be obvious to those skilled in the art of data communications that the dual redundant architecture in FIG. 4 may scale to more than 2 buses.

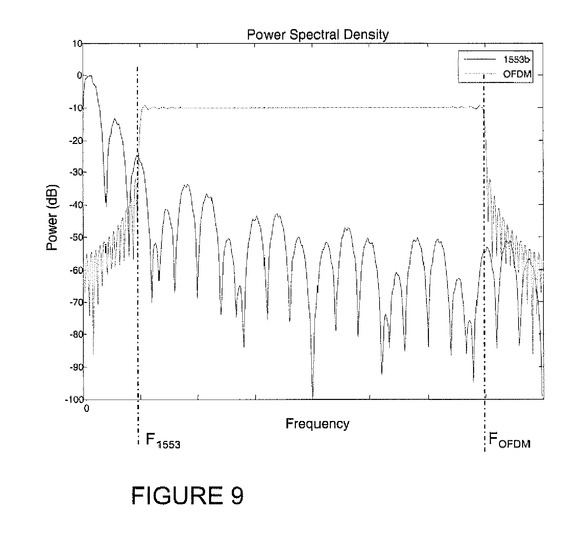

In the above system, as illustrated in Figure 9, OFDM modulation is used to better utilize the available bandwidth on the bus, creating an "overlay" network to operate concurrently and without disturbing existing 1553 communications. This is accomplished by configuring OFDM signals with little energy, or low Power Spectral Density (PSD), in a 1553 high-energy frequency band (0 to $F_{1553}$) and with a relatively constant Power Spectral Density (PSD) in a 1553 low-energy frequency band ($F_{1553}$ to $F_{OFDM}$). In other words, the OFDM waveforms are configured to utilize the frequency band from $F_{1553}$ to $F_{OFDM}$, where 1553 side lobes of a given 1553 system are relatively low. In addition, the OFDM signals have little energy in the 0 to $F_{1553}$ band, reducing the interference of OFDM communications on existing 1553 communications. However, within such a system, 1553 sidelobes in the OFDM frequency band have sufficient energy to interfere with the OFDM signals thus limiting the data throughput of the OFDM overlay networks and therefore of the entire communication system. Thus, within a non-1553 data communications overlay network, non-1553 signals are susceptible to interference from the 1553 signals being communicated over the same physical medium.

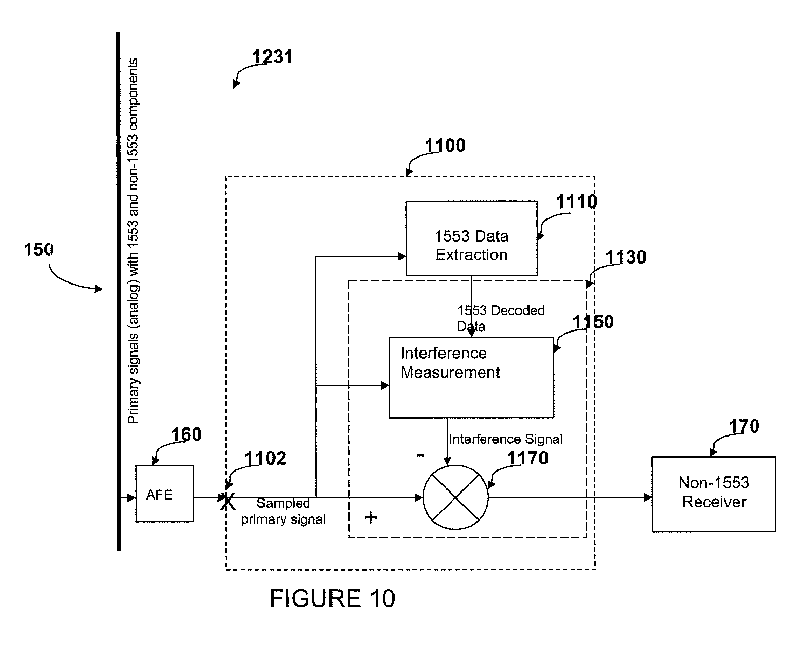

FIG. 10 illustrates an interference cancellation system 1100 according to the invention. The interference cancellation system 1100 is part of a 1553 communication system having an overlay non-1553 communication system. Primary analog signals having a 1553 component and a non-1553 component are being sent and received between various terminals over a data bus 150. According to the present invention, the interference cancellation system 1100 is used in canceling interference of 1553 signals on non-1553 signals, in other words in reducing the 1553 component within the primary signal, prior to decoding for the non-1553 component at a non-1553 receiver 170.

The interference cancellation system 1100 can be viewed as having an input port 1102, a 1553 data extraction block 1110, an interference measurement block 1150 and a cancellation block 1170. The interference measurement block 1150 and the cancellation block 1170 are also referred collectively, in the present description, as an interference canceller 1130, or an interference cancellation circuit.

The interference cancellation system 1100 receives through the input port 102 a sampled primary analog signal from the data bus 150, where the sampling of the primary analog signal is performed by an analog front-end block (AFE) 160, comprising necessary sampling components, such as one or more analog-to-digital converters (A/D) of a suitable resolution. For enhanced performance, the AFE might also comprise other components such as filters, an analog gain control (AGC), etc.

The 1553 data extraction block 1100 is extracting 1553 data from the sampled primary analog signal received from the input port 1102 and outputs 1553 decoded data. The interference measurement block 1150 receives the 1553 decoded data and the sampled primary analog signal and produces an interference signal, also referred to as a 1553 interference signal. The cancellation block 1170 subtracts the interference signal from the sampled primary analog signal, producing a non-1553 signal with reduced 1553 signaling interference, which is further transmitted to the non-1553 receiver 170.

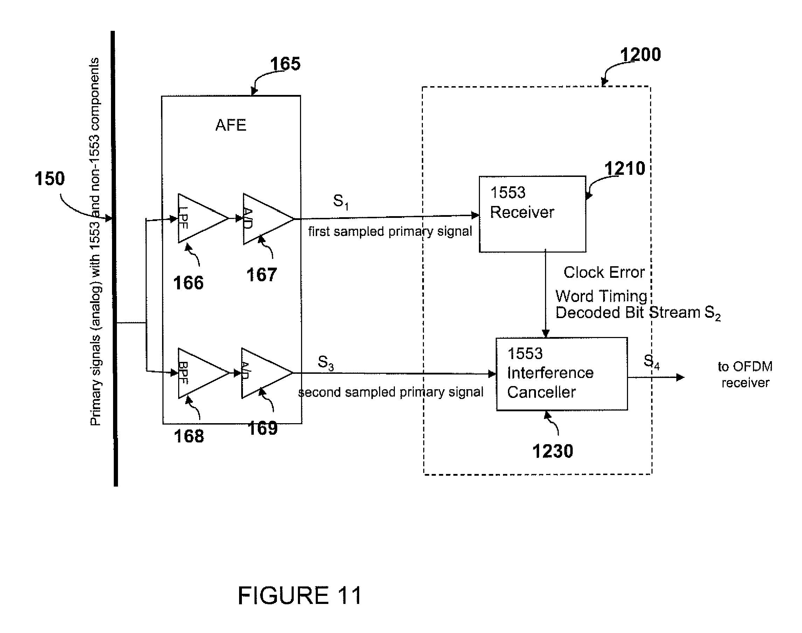

A top level architecture of an interference cancellation system 1200 according to a preferred embodiment of the invention, is illustrated in FIG. 11. In the preferred embodiment, non-1553 signaling is achieved via OFDM coding, so the primary signals carried by the data bus 150 comprise a 1553 component, also referred herein as 1553 signals or 1553 waveforms, and an OFDM component, also referred herein as OFDM signals or OFDM waveforms. Primary signals have a frequency band assignment as illustrated in FIG. 9, with 1553 waveforms having most of their energy in the 0 to $F_{1553}$ frequency band and with the OFDM waveforms utilizing mainly the $F_{1553}$ to $F_{OFDM}$ frequency band.

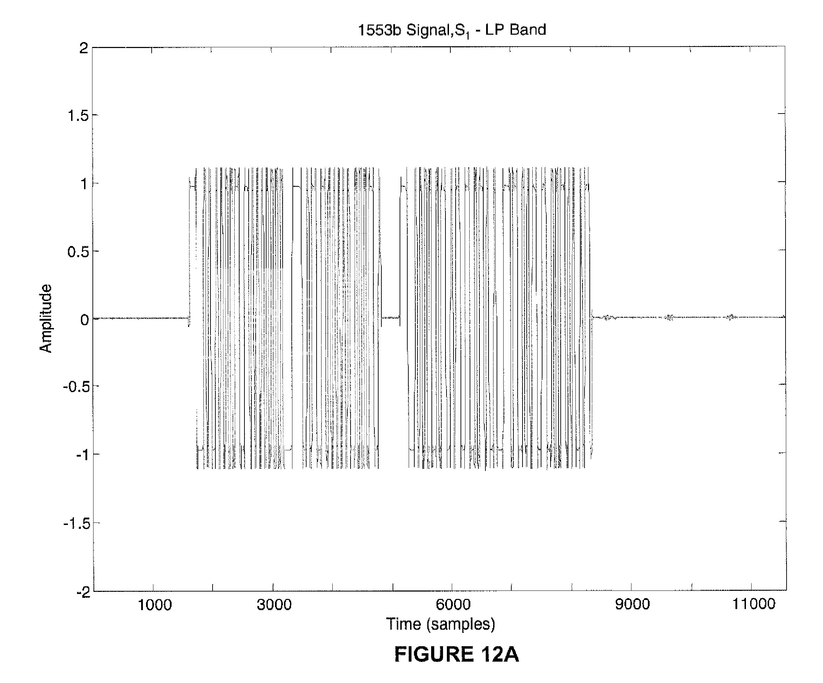

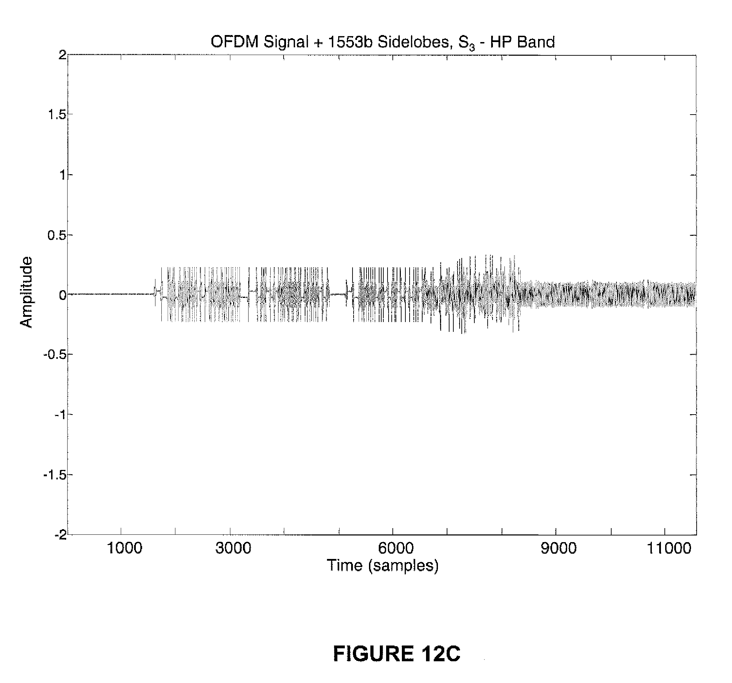

AFE 165 is connected to bus 150 to receive a primary signal. AFE 165 processes the primary signals into a first and a second sampled primary signals, $S_1$ and $S_3$, shown on FIGS. 12A and 12C, respectively. In producing the first and second sampled primary signals, $S_1$ and $S_3$, signal dynamic range and limited number of bits in an analog to digital converter are preferably considered. For such considerations, the AFE 165 utilizes a low pass filter (LPF) 166 to isolate $S_1$ within the 1553 frequency band of interest, 0 to $F_{1553}$, and a bandpass filter (BPF) 168 to isolate $S_3$ within the OFDM frequency band of interest, $F_{1553}$ to $F_{OFDM}$. The filters are followed by analog to digital converters (A/D), 167, 169, for each frequency band. The sampling rates and number of bits in the A/D converters 167, 169, are selected appropriately to satisfy Nyquist criteria and resolution requirements. Due to dynamic range considerations at the OFDM receiver, an AGC could be advantageously used to adjust the gain of the signal going into the A/D 169.

Furthermore, traditional AFE within 1553 transceivers are typically 1 bit A/D converters that accept a bi-phase differential signal at the input and compare these levels to a threshold to convert it to a binary output. For the preferred embodiment, in order to achieve a timing accuracy suitable for efficient 1553 interference cancellation, A/D converter 167 has higher resolution and higher frequency than traditional A/D converters, such as 8 bits at 80 MHz for $F_{RX-OFDM}$= 80 MHz.

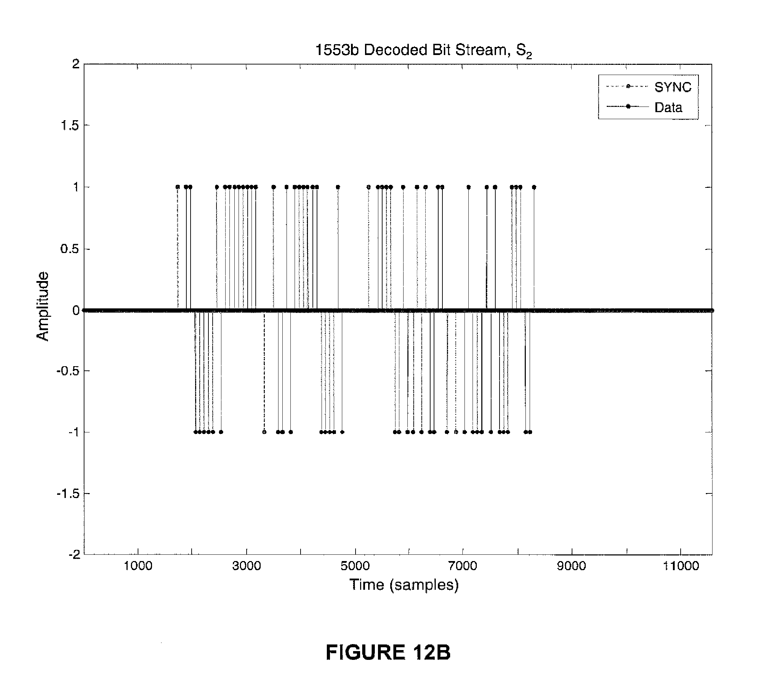

A 1553 receiver 1210 is used for 1553 data extraction from the first sampled primary signal, $S_1$. The 1553 receiver 1210 receives the first sampled primary analog signal $S_1$ from AFE 65 and produces metrics for the Interference Canceller 1230. A preferred set of 1553 metrics include a decoded 1553 bit stream $S_2$, as illustrated in FIG. 12B, a 1553 word timing and an estimate of the clock error of the 1553 transmitter relative to the OFDM receiver.

The 1553 word timing must have an accuracy of a fraction of a sample of the sampling period of the OFDM receiver, $1/F_{RX-OFDM}$. The IC system will be operating at substantially the same clock frequency as the OFDM system and will expect the 1553 symbol frequency to be exactly equal to a certain fraction of this OFDM clock rate. Typically, crystal oscillators' are used to clock state-of-the-art circuits and can have an accuracy of less than +/- 20 parts per million (p.p.m.). Older 1553 devices may have clock frequencies that deviate more than this due to the technology available at the time and the affect of aging on these types of components. Consequently, any given 1553 device will not usually operate with the symbol frequency expected by the IC system and the offset between this expected frequency and the actual 1553 frequency is referred to as the clock error.

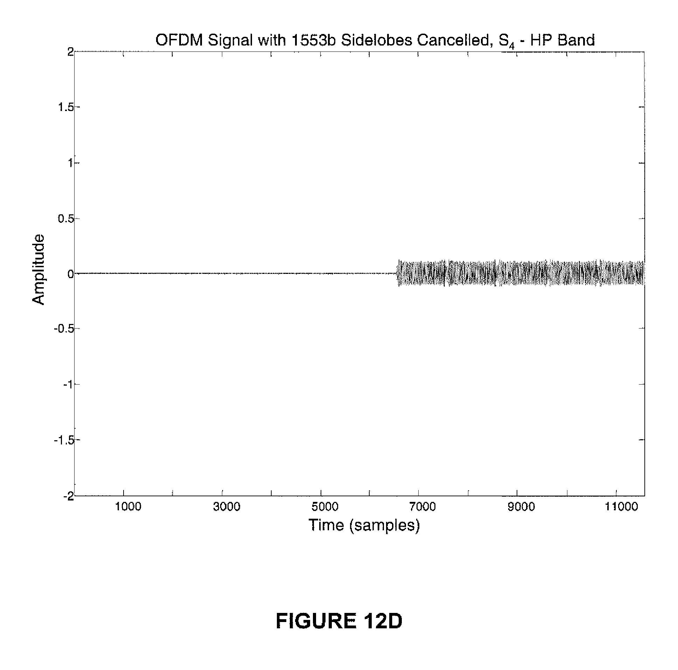

In addition to 1553 metrics, an Interference Cancellation circuit 1230 also receives the second sampled primary analog signal $S_3$ from the AFE 65. The Interference Cancellation circuit 230 uses the metrics from the 1553 receiver 1210 to synthesize the unwanted, interfering 1553 signaling component (or, simply, 1553 interference signal) and subtract from the received second sampled primary sampled signal $S_3$. The residual signal $S_4$ at the output of the interference cancellation circuit 230 is further passed to an OFDM receiver for demodulation. The $S_4$ waveform is shown in FIG. 12D.

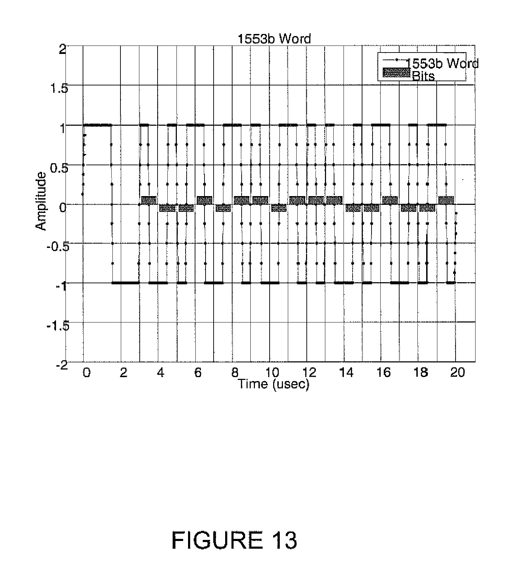

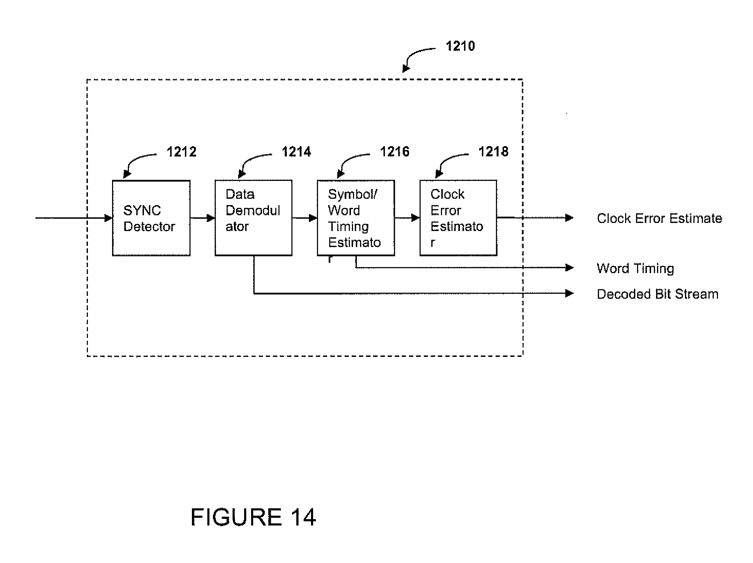

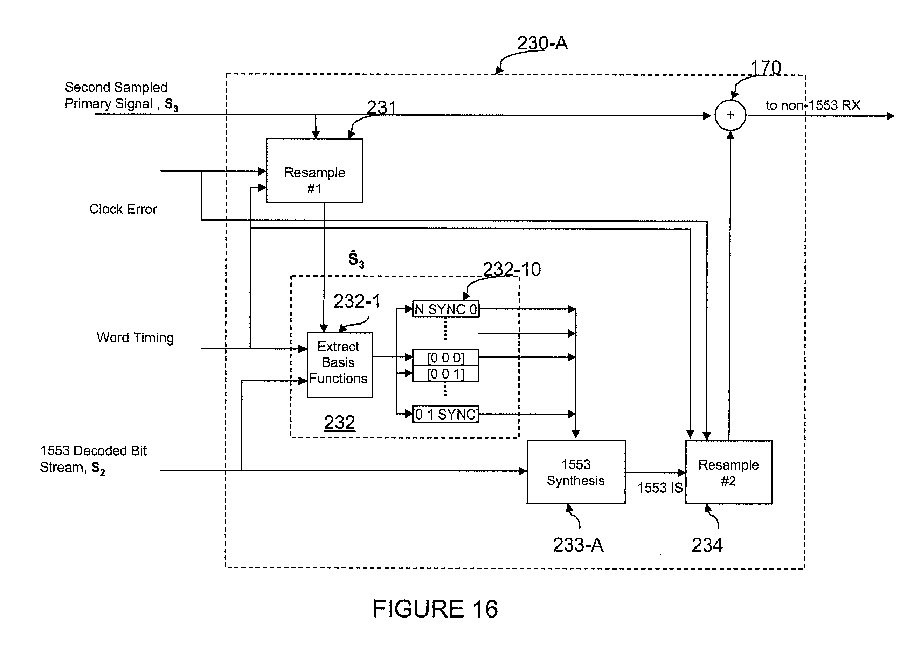

The operation of the 1553 receiver 1210 in extracting 1553 decoded data according to the preferred embodiment, is further detailed, in reference to FIGS. 13 and 14. FIG. 13 shows a transmitted 1553 signal according to MIL-STD-1553B, consisting of waveforms representing a 1553b word comprising synchronization (SYNC) symbol (3 bit times), followed by 16 data symbols and 1 parity symbol. Multiple 1553b word can be concatenated to create a longer 1553b message. The bit rate is 1 bit/symbol and the symbol rate is 1 symbol/μsec. Bit values for the data symbols and parity symbol (positive indicating a value of 1 and negative indicating a value of 0) are indicated by thick bars along the time axis. As shown in FIG. 16, for producing a 1553 decoded bit stream, a 1553 symbol/ word timing estimate and a 1553 clock error estimate, the 1553 receiver 1210 comprises a SYNC detector 1212, a data demodulator 1214, a Symbol/ Word Timing estimator 1216 and a Clock Error Estimator 1218.

The SYNC detector 1212 searches for valid SYNC symbol in $S_1$. After a valid SYNC detected, the data demodulator 1214 decodes a 16 bit message and parity bit from the following 117 symbols within $S_1$. A bit is determined to be a 1 or a zero by measuring a transition from a positive to negative voltage or negative to positive voltage respectively at the appropriate times after the middle zero crossing of the SYNC symbol. SYNC symbols can either transition from a positive to negative voltage or vice-versa depending on the type of word being transmitted. The SYNC zero crossing occurs at approximately 1.5 μsec, from the beginning of the word. The transition of the first data symbol occurs approximately 2 μsec after the SYNC zero crossing and subsequently about every 1 μsec.

The Timing Estimator block 1216 computes the accurate 1553 symbol/ word timing. The timing of the 1553 word can be determined by averaging the zero crossing timing of the SYNC symbol, data symbols and parity symbol. According to MIL-STD-1553, there is significant tolerance in determining the timing of the zero crossings (zero crossing jitter) that amounts to 150 nsec or 15% of the bit time. Although this is suitable for 1553 demodulation, 1553 interference cancellation is preferably achieved by determining the timing of a 1553 symbol or word to a fraction of a sample at the sampling rate of the OFDM receiver $F_{RX-OFDM}$ (preferably < 10 nsec for $F_{RX-OFDM}$= 80MHz), as previously mentioned. More particularly, improved performance can be obtained by the use of a correlation receiver to more effectively measure the timing in a noisy environment, as it will be recognized by those skilled in the art.

Due to the inaccuracies of real clock components, clock frequencies at typical transmitter - receiver pairs are not identical. The Clock Error Estimator 1218 is used to measure the deviation between the 1553 transmitter and OFDM receiver clock frequencies. The clock error estimate provided by this block is used by the resampling functions of the Interference Canceller 1230 to resample the primary signals for Basis Function estimation, as it will be further discussed. The clock error can be calculated by measuring the zero crossing times for each symbol and comparing this to the expected zero crossing times. This can be done using various state-of-the-art techniques, such as linear least square curve fitting. In this case, the slope of the best fit line yields the relative clock error (a slope of 1 indicates no error). Other known-in-the-art estimation methods may be used to estimate the clock error.

Interference Cancellation - Basis Function Method

The terms "Basis Function" or "1553 Basis Function" are used interchangeably in this description to define the possible waveforms that a 1553 signal can assume over sub-intervals of the 1553 signal. It will be recognized that based on this definition, Basis Functions that may correspond to same encoded data, such as [0 0 1], will have different analog representations from system to system, and depending on location within a system, such as at the transmitter, along a data bus, at a receiver, at an Interference Cancellations System. For example, two different transmitters will output slightly different 1553 waveforms for the same encoded data, due to manufacturing differences. Furthermore, various components in the path of a 1553 signal, such as filters, sampling devices, as well as channel effects, will render a 1553 signal at the transmitter to be different than a 1553 signal at or near a receiver. However, despite such differences in the analog domain, the preferred embodiment of the invention attempts to ensure that correspondence of Basis Functions with predefined encoded data sequences can be maintained and tracked, regardless of system and of location within the system. Therefore, a particular Basis Functions name will often comprise the predefined symbol sequence tag, e.g. [0 1 0], as well as an indicator of the location within the system, e.g. transmitter. When multiple transmitters are implied, a transmitter tag may also appear, however, most of the description would be carried on the assumption of a single given transmitter.

In the preferred embodiment, Basis Functions are formed by decomposing a 1553 word at the SYNC and bit boundaries, as illustrated by solid vertical separation lines in FIG. 13. The choice to partition the signal at the SYNC and bit boundaries is natural but somewhat arbitrary in this context. An obvious alternative would be to decompose signal into ½ bit intervals for example. Other partition choices and building functionally equivalent circuits should be obvious to someone skilled in the art.

Since the Manchester II Bi-Phase modulation scheme used in 1553 is of low complexity with a limited number of possible states, given by all the possible combinations of SYNC, data and parity symbols each with only 2 polarities, there are only a small number of 1553 symbol patterns that can be generated. This is also true for a 1553 signal that has been transmitted through a channel provided the channel is time invariant, but not necessarily linear. Consequently, it is possible to compile a catalog of a small number of basis functions which can be strung together to synthesize any possible received 1553 waveform. For the preferred embodiment choice of partitioning, with partition segments corresponding to 1553b symbols, a data symbol that is not next to a SYNC symbol, is affected by only the previous data symbol and the next data symbol, due to bit transitions. A different choice of partitioning could be used where the waveform of one partition segment is affected only by the previous partition segment.

A standard transmitted 1553b word comprises trapezoidal waveforms, causing a 1553b symbol to interfere with the next one. In addition, a channel, which may include just the transmission medium and/or analog components of the transceiver, will typically cause a signal to spread out in time due to multi-path propagation effects. This temporal spreading of a 1553 signal would cause one symbol to further "interfere" with the next. This interference between symbols phenomenon is known to those skilled in the art as Inter-Symbol Interference (ISI). The following description considers the ISI to be limited such that only 3 symbols (3 bits periods) need to be considered when extracting a 1553 Basis Function. It should be obvious to someone skilled in the art that for greater or smaller ISI, more or less than 3 symbols could be considered, in a similar fashion.

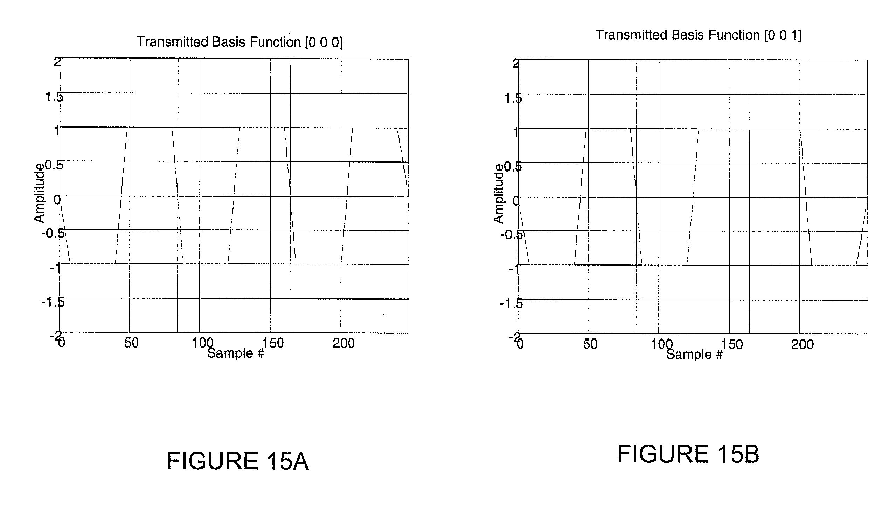

When considering Basis Functions affected by 3 data symbols, there are a total of 8 possibilities representing bit combinations [0 0 0], [0 0 1], [0 1 0], [0 1 1], [1 0 0], [1 0 1], [1 1 0], [1 1 1]. In the 1553 frequency band, 0 to $F_{1553}$, the transmitted [0 0 0] and [0 0 1] 1553 Basis Functions are shown in FIG. 15A, 15B.

Note that half of the 1553 Basis Functions are the negative of the other half ([0 0 0] is equivalent to - [1 1 1]), thereby reducing the number of unique Basis Functions required. Additionally, the extraction of the Basis Function can be offset from the middle of the three symbols long Basis Function and for a causal system would be delayed to capture the effect of the ISI.

Because a 1553 word starts with a SYNC symbol and multiple words can be concatenated to produce a longer message, there are additional Basis Functions required to entirely describe the signal. These include Basis Functions accounting for the first data symbol and the last data symbol in a word because one is preceded by a SYNC symbol and the other followed by no signal or another SYNC symbol, respectively. The SYNC symbol may also be preceded by no signal or the parity symbol of the previous word. The SYNC can also be positive or negative based on the type of 1553 word, such as a Command, Status or Data word. The possible symbol conditions for extracting SYNC Basis Functions are described in Table1 and the symbol conditions for extracting the 1553 Basis Functions for the last parity bit are described in Table 2.

| Table 1 | | |
|---|---|---|
| Final bits of previous word | SYNC | First Data Symbol |
| No signal | + | 0 |
| No signal | + | 1 |
| 00<br>01<br>10<br>11 | +<br>+<br>+<br>+ | 0<br>0<br>0<br>0 |
| 00<br>01<br>10<br>11 | +<br>+<br>+<br>+ | 1<br>1<br>1<br>1 |
| 00<br>01<br>10<br>11 | -<br>-<br>-<br>- | 0<br>0<br>0<br>0 |
| 00<br>01<br>10<br>11 | -<br>-<br>-<br>- | 1<br>1<br>1<br>1 |

| Table 2 | | |
|---|---|---|
| Preceding data symbol | Parity bit | SYNC of next word |
| 0 | 0 | No signal |
| 0 | 1 | No signal |
| 1 | 0 | No signal |
| 1 | 1 | No signal |
| 0 | 0 | + |
| 0 | 0 | - |
| 0 | 1 | + |
| 0 | 1 | - |
| 1 | 0 | + |
| 1 | 0 | - |
| 1 | 1 | + |
| 1 | 1 | - |

In practice, the effect of a SYNC symbol can be considered like the effect of a data symbol when extracting a 1553 Basis Function for the first data symbol or the parity symbol, thereby reducing the number of unique 1553 Basis Functions required.

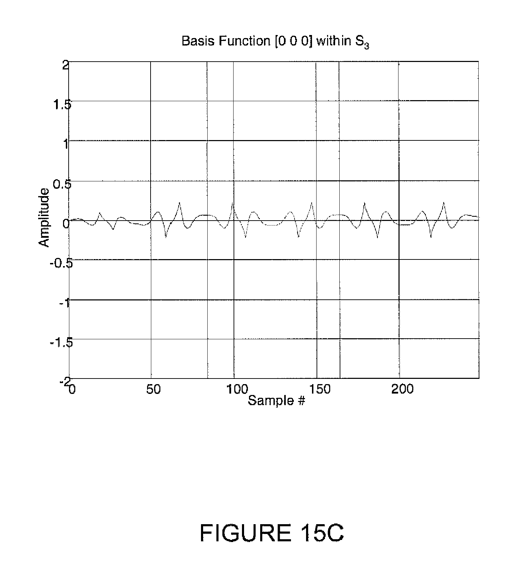

For the preferred embodiment, the band-pass filter (BPF) 168 and the separate A/D 169 are utilized for obtaining the second sampled primary signal $S_3$, as illustrated in FIG. 11. Consequently, 1553 components within signal $S_3$ have low amplitude and high frequency. Accordingly, a 1553 [0 0 0] Basis Function extracted from $S_3$ looks as illustrated in FIG. 15C.

FIG. 16 is a block diagram of a 1553 Interference Canceller block 1230-A, based on a direct Basis Function (BF) method, according to the preferred embodiment of the invention. The 1553 Interference Canceller 1230-A, comprises a first resampler 1231, an Accumulate Basis Functions block 1232, a 1553 Synthesis block 1233-A, a second resampler 1234 and cancellation means 1170.

The first resampler 1231, receives the second sampled primary signal $S_3$ from AFE 65, the clock error estimate from the 1553 receiver 1210 and the 1553 word timing and corrects for any relative clock error, by producing a resampled primary signal $\hat{S}_3$. The advantage of producing a resampled primary signal $\hat{S}_3$ will become clearer after understanding the operation of the Accumulate Basis function block 1232.

An Extract Basis function block 1232-1 within the Accumulate Basis function block 1232 receives the resampled primary signal $\hat{S}_3$ and the 1553 decoded bit stream $S_2$, identifies transmitted Basis Functions within $S_2$ and extracts the corresponding waveform from within $\hat{S}_3$ and sends it to a corresponding averaging buffer 1232-10, also within the Accumulate Basis function block 1232. Within the Extract Basis function block 1232-1 the decoded bits and SYNC polarity are used to identify the Basis Function and to determine in which buffer to integrate them. The Basis Functions are extracted from $\hat{S}_3$ in the presence of noise and averaged over multiple 1553 words. OFDM transmissions and some noise will appear to be uncorrelated to these signals and will average out from the estimates. It will be recognized by those skilled in the art that the operation of averaging Basis Functions within a buffer may be implemented in various ways. For example, one can use linear averaging, exponential averaging, etc. Also, an updating mechanism may be associated, such that for a buffer holding N basis functions, the first basis function extracted is discarded when an N+1th is available to enter the buffer. Furthermore, there might be fill-in periods for a buffer, such as when filling in a buffer for the first time in use or after a reset that might follow a long idle time, for example.

Returning to the idea of resampling, feeding a resampled primary signal $\hat{S}_3$ to the Accumulate Basis Function block 1232, ensures that Basis Functions that are extracted from different locations in the resampled primary signal $\hat{S}_3$ are aligned sufficiently for proper averaging. For example, for an OFDM receiver clocking at 80MHz and a 1553 transmitter transmitting at 1MHz, it is desired that 1553 data/parity symbols are resampled to be exactly 80 samples long and that SYNC symbols are resampled to be exactly 240 samples long, namely 3 times longer than a data/parity symbol. The Basis Functions are estimated in the presence of noise and averaged over multiple 1553 words. OFDM transmissions will appear to be uncorrelated to these signals and will average out from the estimates.

The accumulated Basis Functions are used by the 1553 Synthesis block 1233-A along with the 1553 decoded bit stream to reconstruct the decoded signal interference in the high frequency band, but in this case, without the noise and OFDM signal components which have substantially averaged out in extracting the basis functions. In the Interference Cancellation via the Direct Basis Function Method, the 1553 signal synthesis is essentially the inverse of the Basis Function extraction. The SYNC polarity and data/parity the bit sequences are used to determine the order in which Basis Functions are strung together to reconstruct the 1553 interference.

The second resampling block 1234 resamples the synthesized 1553 interference at the 1553 receiver 1210 sampling rate, using the clock error estimate and the 1553 word timing estimate. The second resampling operation effectively undoes the sampling rate change done by the first resampling block 1231, and produces a resampled 1553 interference signal at the appropriate fractional sample timing, 1553 IS. The resampled 1553 interference signal is subtracted from the second sampled primary signal $S_3$ within the cancellation means 1170, producing an output signal $S_4$ comprising mainly the OFDM component, as illustrated in FIG. 4D.

In an alternate embodiment, the first resampling block 1231 and the second resampling block 1234 may be located at different locations. For example, the Cancellation block 1170 may receive a resampled second sampled primary signal $\hat{S}_3$, via the first resampling block 1231, rather than the second samples primary signal, $S_3$, as in FIG. 8. In this case, the second resampling block 234 would be located after the Cancellation block 1170, rather than prior to it.

The above interference cancellation system is based on a direct basis function technique. In an alternative embodiment, the interference measurement block 150, presenting further advantages such as speed and storage requirements in most cases, degree of interference cancellation achieved for substantially linear systems, ease of implementation etc. An alternate implementation relies on the interference measurement block 150 using an impulse response (IR) approach, by modeling the path traveled by the 1553 signal within the primary signal, starting from the originating 1553 transmitter (not shown) and up to the 1553 data extraction block 110, as a linear system. Specifically, the IR model is used to synthesize a replica of the 1553 interfering signal, as the response of the model linear system when excited by a train of impulses x(n). The synthesized 1553 interference signal 1553 IS is given by

$$y(n) = w^T x(n) \qquad (1)$$

where $w^T$ is the transposed column vector w of N impulse response coefficients and x(n) is the column vector given by the N most recent input samples:

$$x(n)=[x(n)\ x(n-1)\ \ldots\ x(n-N+1)\ ]^{\top} \qquad (2)$$

The problem of determining the impulse response coefficient vector w which will best replicate the 1553 transmitter, channel and interference cancellation system front end can be approached in several ways. Two preferred implementations will be described. Briefly, one approach uses an adaptive filtering technique based on the least mean squares (LMS) algorithm. Other adaptive filtering techniques that would also be suitable, are the Recursive Least Squares (RLS), and frequency domain techniques, such as the Overlap and Save Frequency Domain Adaptive Filtering (OSFDAF). The other approach for determining the IR coefficient vector w is to accumulate a small number of basis functions and solve for w directly from these.

Interference Cancellation System with Impulse Response modeling using Least Mean Squares (LMS) adaptive filtering

One possible implementation of the Interference canceller blocks 130, 230 in FIGs. 2 and 3, using an Impulse Response approach, based on (1) and using the Least Mean Square (LMS) adaptive filtering technique for determining the impulse response coefficients will now be described. In general, LMS estimation is a technique for modeling a system by minimizing the mean square error between measurement data and data produced by the model. A preferred implementation uses a Finite Impulse Response (FIR) approach for adapting impulse response coefficients as closely as possible to the impulse response of the system. Other variants of LMS, such as Block LMS, Frequency domain implementations, IIR, non-linear, variable step size, RLS are not excluded as possible implementations choices.

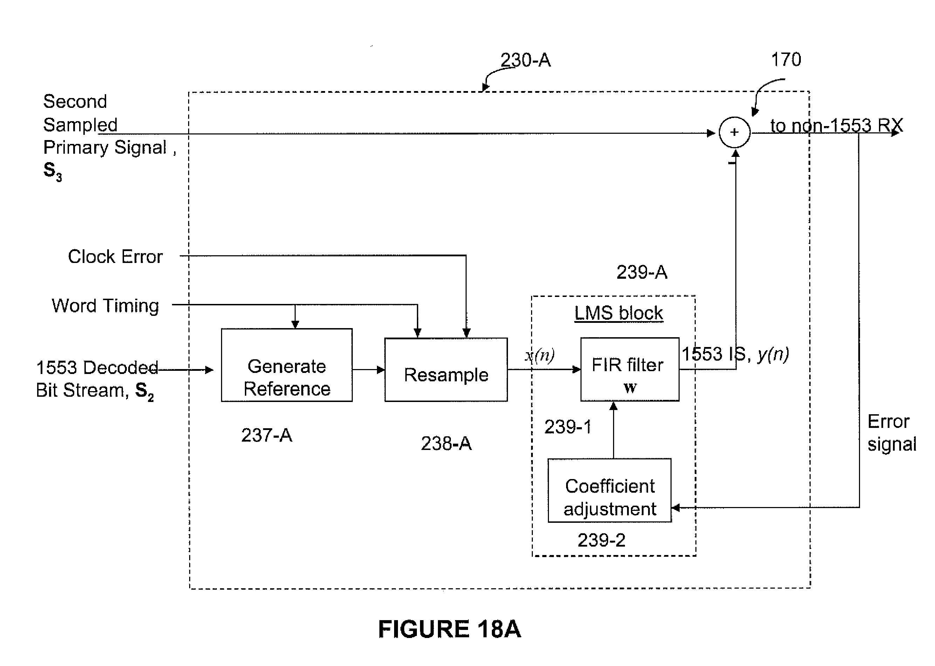

FIGS. 18A-18C are block diagrams of 1553 Interference Canceller block 230-A, 230-B, 230C using an Impulse Response approach based on the Least Mean Square (LMS) adaptive filtering technique. Referring specifically to FIG. 18A, the 1553 Interference Canceller 230-A comprises a reference signal generator 237-A, a resampler 238-A, an LMS block 239 and Cancellation means 170.

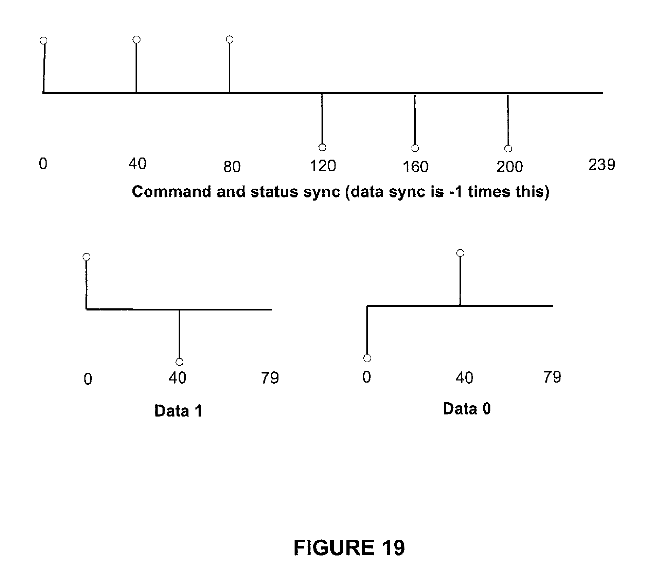

The reference generator block 237-A produces a 1553 reference signal based on the 1553 decoded bit stream $S_2$ and the word timing, an by using selected Command SYNC, Status SYNC, Data SYNC and data symbols impulse sequences such as in FIG. 19. Other 1553 input sequences may be used, as it will be recognized by those skilled in the art.

Since the 1553 transmitters do not have clocks synchronized with the interference measurement block 150, the Resample block 238-A uses the word timing and clock error estimate to resample the reference signal in adjusting for fractional timing errors and correcting the sampling rate. The output of the resample block 238-A is an interpolated or resampled reference signal *x(n)* with the correct timing and the sampling rate of the 1553 interference measurement block 150, which in this case is substantially the OFDM sampling rate.

The LMS block 239-A has an FIR filter 239-1 and a coefficient Adjustment block 239-2. Within the LMS block 239-A, an FIR filter 239-1 uses coefficients w generated by an LMS algorithm to perform a FIR filtering operation on the resampled reference input signal *x(n)* to synthesize a replica of the 1553 interference, *y(n)*, as per equation (1) above.

The synthesized 1553 interference signal 1553 IS is subtracted from the second sampled primary signal $S_3$ within the cancellation means 170, producing an output signal $S_4$ comprising mainly the OFDM component, as illustrated in FIG. 4D. The output of the cancellation means 170 is also the error signal used as input to the Coefficient Adjustment block 239-2.

As an example, for a 1MHz 1553 transmitter and an 80MHz non-1553 receiver, the following LMS filtering operations are performed every 80 MHz sample:

Shifting a new reference signal sample into the x vector

$$\text{Setting} \quad \begin{array}{l} x(i+1) = x(i)\ \text{for}\ i = 0,2,...,N-2 \\ x(0) = r \end{array}$$

where r is the reference signal sample.

Performing the FIR filtering operation (dot product) and calculating the error

$$e = p - \sum_{i=0}^{N-1} x(i)w(i)$$

where *p* is the filtered primary signal sample.

Updating the filter coefficients

Implementation of an LMS technique can be quite complex in the general case, where for an N length input sequence it may require about 2N multiplies for each output sample and the filter order N may be over 200. However, within the Interference Canceller block 230-A, the reference signal consists of a sequence of interpolated unit impulses and about three quarters of the points in this sequence are substantially zero. Consequently, there are only about N/4 non-zero multiplies necessary in steps 2 and 3 above. Advantageously the filter can also be designed in such a way that half of the multiplies are all by powers of 2 and hence can be implemented by bit shifts.

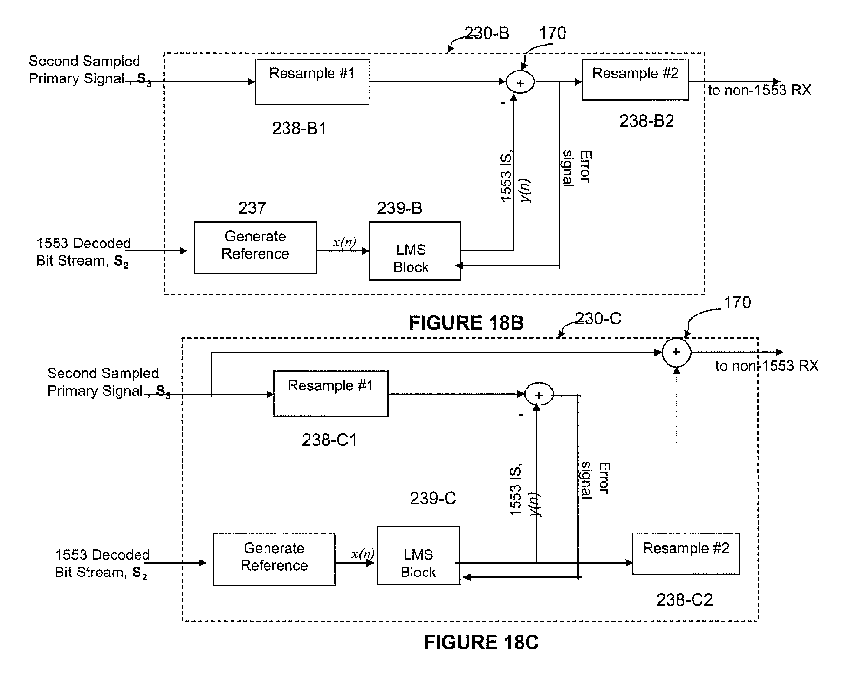

The Interference Canceller block 230-B in FIG. 18B uses a modified LMS implementation. In this implementation, the reference signal generated by the generate reference block 237 is fed directly to an LMS block 239-B, which produces a synthesized 1553 interference signal , 1553 IS.

For matching the sampling rate and synchronize timing of the 1553 interference signal and the second sampled primary signal $S_3$ at cancellation circuit 170, the second primary signal $S_3$ is resampled by resampling block 238-B1, to produced a resampled second primary signal $\check{S}_3$. In the preferred embodiment, the sampling rate of the resampled second sampled primary signal $\check{S}_3$ is modified to that there are exactly $F_{OFDM}/F_{1553}$ samples in each 1553 symbol. As the output difference or error signal is to be sent to an OFDM receiver, an up-sampling of this error or difference signal is performed by a second resampling block 238-B2, in producing a resampled difference signal. The output of the cancellation circuit is feedback to the LMS block 239-B, for allowing coefficient adjustment based on the LMS algorithm. The resampling blocks 238-B1 and 238-B2 also receive the clock error and the 1553 word timing estimator as inputs, but this detail has been omitted from the drawing for simplicity.

At first glance, the implementation in FIG. 18A may look simpler since it has only one resampler block. Furthermore the resampler 238-A is always resampling a unit impulse and so can be implemented using look-up table (LUT) accessing. However, the LMS block 239-B can be made to use less multiplies than the LMS block 239-A, as the LMS coefficient update within LMS block 239-B is:

$$w_{n+1} = w_n + \mu e_n x_n$$

where $\mu$ is the LMS step size parameter and $e_n$ is the error signal. In FIG. 7B, every 40th sample of $x(n)$ is $\pm 1$ and the rest are zeros. This means that if $\mu$ is chosen as power of 2, one can just shift $e_n$ and then add or subtract it from $w$ according to the sign of $x$. Therefore, there are only N/40 of these additions. The FIR filter operation is as in (1) and again this amounts to only N/40 adds or subtracts. Each LMS filter update can be done without any multiplies.

If the implementation of FIG. 18A is used, the resampled reference sequence is no longer just $\pm 1$ and there many more than 1 out of 40 non-zero values, depending on set threshold values, orders of interpolation with the LMS algorithm etc. For example, if 10 out of 40 non-zero values, there are about $N/2$ multiplies for each filter update, hence more than if using two resamplers as in the implementation of FIG. 7B as discussed.

The Interference Canceller block 230-C in FIG. 18C illustrates an alternative to the Interference Canceller block 230-B in FIG. 18B, in placing the resampling blocks 238-C1 and 238-C2 out of the paths of signals including a substantial OFDM components, in order to avoid unnecessarily resampling the OFDM signal twice and losing fidelity as a result.

This embodiment of the invention thus provides a novel system and method of calculating Impulse Response coefficients for a system by accumulating a small number of basis functions extracted from an output state of the system and solving for the impulse response coefficients w from these basis functions is provided by the present invention. In particular, for a 1553 cancellation system, one would extract basis functions from 1553 interfering signal. Without loss of generality, the concept of basis functions and of an impulse response system and method based on accumulated basis functions as it pertains to 1553 signals will be detailed. In the next section, the impulse response technique using basis functions, in the context of 1553 interference cancellation, is described.

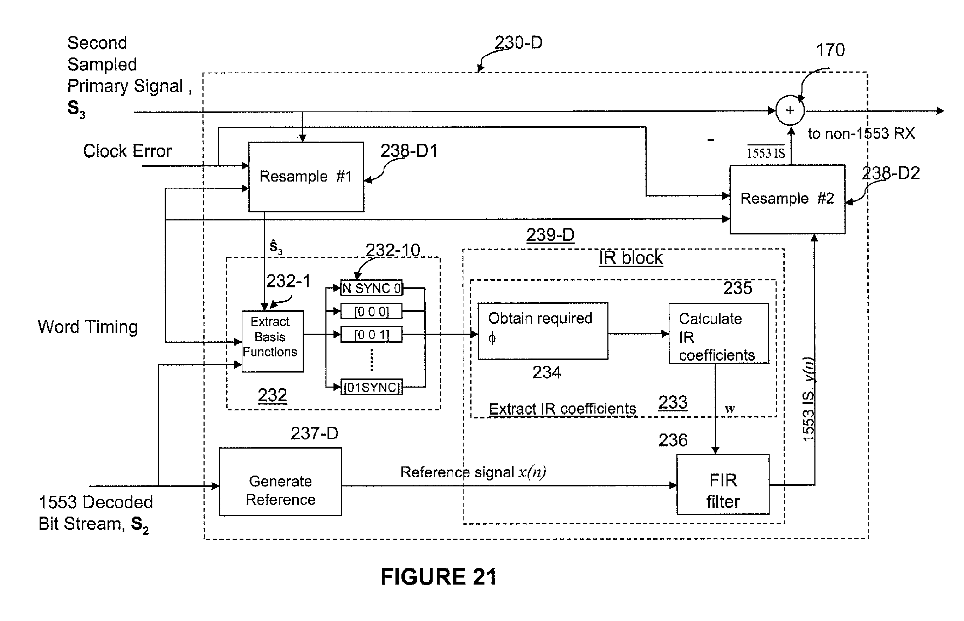

FIG. 21 illustrates a block diagram of a 1553 Interference Canceller block 230-D based on a Basis Function/ Impulse Response method. The 1553 Interference Canceller 230-D comprises a first resampler 238-D1, an accumulate 1553 Basis Functions block 232, an Impulse Response (IR) block 239-D, a second resampler 238-D2 and cancellation means 170. Within 1553 Interference Canceller block 230-D the IR coefficient vector w is determined by accumulating a small number of basis functions and solving for w directly from these.

The IR block 239-D has an obtain required $\Phi$ sequence block 234, a deconvolution or calculate IR coefficients block 235, and a 1553 signal synthesizer / FIR filter 236. Although modeling the discrete linear system as a Finite Impulse Response (FIR) filter is detailed here, other state-of-the-art Impulse Response models, such as Infinite Impulse Response (IIR) models, are equally applicable.

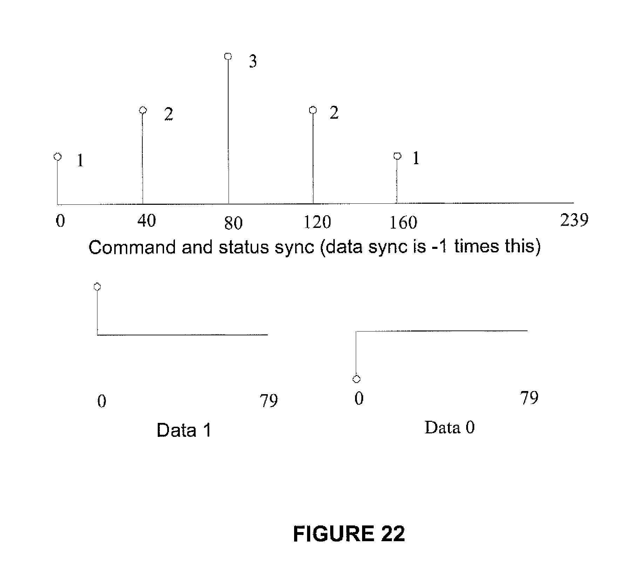

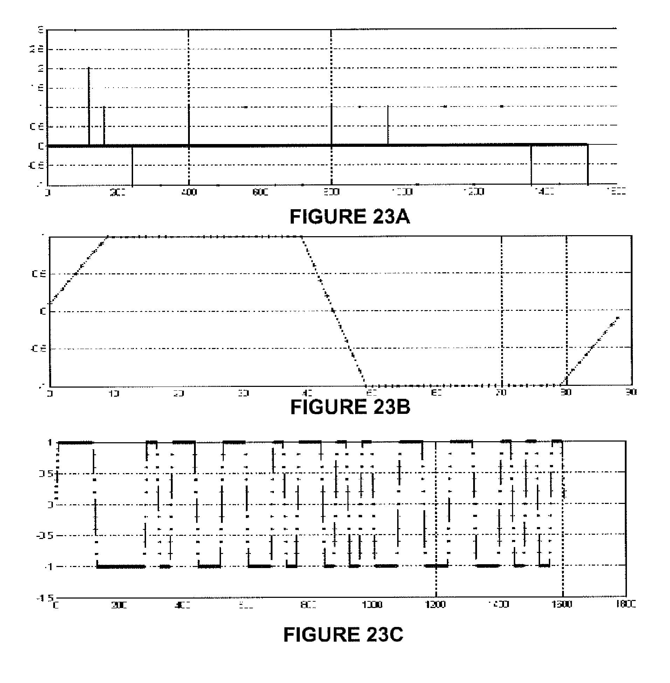

The generate reference block 237-D and the two resampler blocks 238-D1 and 238-D2, are similar to those within the Interference Canceller 230-A based on Impulse Response via LMS. In the preferred embodiment, the generate reference block 237-D produces a reference signal x(n) based on special input sequences such as in FIG. 22 and based on the 1553 decoded bit stream $S_2$. A 1553 impulse sequence or reference signal x(n) thus constructed, an example of which is illustrated in FIG. 23a, when convolved with a pulse shaping filter sequences such as in FIG. 23b, produces a 1553 transmit word such as in FIG. 23c. This 1553 signal synthesis operation would take place as part of the Impulse Response block 239-D.

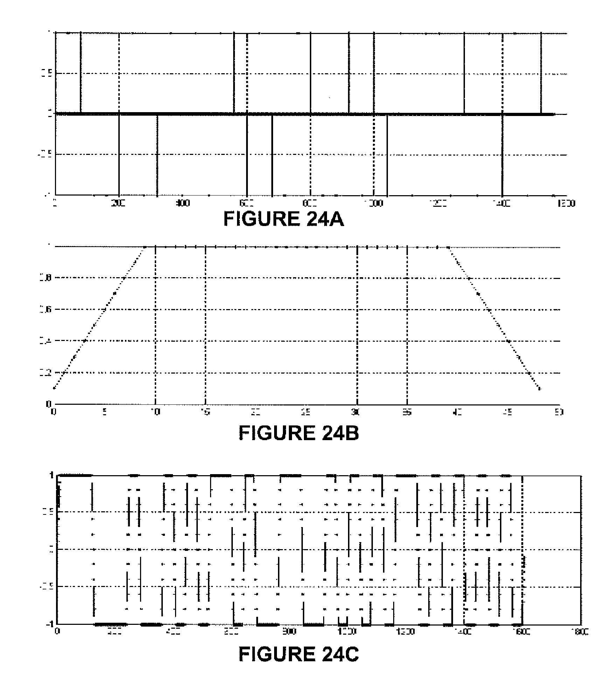

In the embodiment of FIGs. 22 and 23a, the reference sequence *x(n)* is composed of impulses spaced by 80 samples in the data segment of a 1553 word. Due to the symmetry in the 1553 pulse shape of some embodiments, it is also possible to generate a 1553 word using a reference sequence with impulses spaced at 40 samples, such as based on special sequences shown back in FIG. 19. A 1553 impulse sequence or reference signal x(n) thus constructed, an example of which is illustrated in FIG. 24a, when convolved with a pulse shaping filter sequences such as in FIG. 24b, produces a 1553 transmit word such as in FIG. 24c. To distinguish the two embodiments, the Basis Function technique using impulses spaced 80 samples is referred to as $BF_{80}$ and the Basis Function technique using impulses spaced 40 samples is referred to as $BF_{40}$. $BF_{80}$ will be first described in detail. Differences pertaining to $BF_{40}$, in comparison with $BF_{80}$, will be highlighted later on.

The first resampler 238-D1 produces a resampled second sampled primary signal $\hat{S}_3$, with sampling rate and word/symbol timing adjusted such as for allowing extraction of basis functions from itself upon examination of 1553 decoded data $S_2$, as described next. The second resampling block 238-D2 resamples the synthesized 1553 interference signal produced by the IR block 239-D, effectively undoing the sampling rate and timing changes of the first resampling block 238-D1. The resultant resampled 1553 interference signal, 1553IS is subtracted from the second sampled primary signal $S_3$ within the cancellation means 170, producing an output signal $S_4$ comprising mainly the OFDM component, as illustrated in FIG. 12D. In an analogous manner to the IR via LMS implementations, placing the resampling blocks at different locations within the system is possible.

An Extract Basis function block 232-1 within the Accumulate Basis function block 232 receives the resampled primary signal $\hat{S}_3$ and the 1553 decoded bit stream $S_2$, identifies transmitted Basis Functions within $S_2$ and extracts the corresponding waveform from within $\hat{S}_3$ and sends it to a corresponding averaging buffer 232-10, also within the Accumulate Basis function block 232. Within the Extract Basis function block 232-1 the decoded bits and SYNC polarity are used to identify the Basis Function and to determine in which buffer to integrate them. The Basis Functions are extracted from $\hat{S}_3$ in the presence of noise and averaged over multiple 1553 words. OFDM transmissions and some noise will appear to be uncorrelated to these signals and will average out from the estimates. It will be recognized by those skilled in the art that the operation of averaging Basis Functions within a buffer may be implemented in various ways. For example, one can use linear averaging, exponential averaging, etc. Also, an updating mechanism may be associated, such that for a buffer holding N basis functions, the first basis function extracted is discarded when an N+1th is available to enter the buffer. Furthermore, there might be fill-in periods for a buffer, such as when filling in a buffer for the first time or after a reset, that might follow a long idle time, for example.

Returning to the idea of resampling, feeding a resampled primary signal $\hat{S}_3$ to the Accumulate Basis Function block 232, ensures that Basis Functions that are extracted from different locations in the resampled primary signal $\hat{S}_3$ are aligned sufficiently for proper averaging. For example, for an OFDM receiver clocking at 80MHz and a 1553 transmitter transmitting at 1MHz, it is desired that 1553 data/parity symbols are resampled to be exactly 80 samples long and that SYNC symbols are resampled to be exactly 240 samples long, namely 3 times longer than a data/parity symbol. The Basis Functions are estimated in the presence of noise and averaged over multiple 1553 words. OFDM transmissions will appear to be uncorrelated to these signals and will average out from the estimates.

The accumulated Basis Functions are used by the 1553 Synthesis block 236 along with the 1553 decoded bit stream to reconstruct the decoded signal interference in the high frequency band, but in this case, without the noise and OFDM signal components which have substantially averaged out in extracting the basis functions. In the Interference Cancellation via the Direct Basis Function Method, the 1553 signal synthesis is essentially the inverse of the Basis Function extraction. The SYNC polarity and data/parity the bit sequences are used to determine the order in which Basis Functions are strung together to reconstruct the 1553 interference.

The IR block 239-D comprises an Obtain required $\Phi$ block 234, aCalculate IR coefficients block 235 and an FIR filter 236. The Extract IR coefficients block 235 is based on the assumption that the 1553 channel can be represented by (1) as well as based on the assumption that 1553 symbol waveforms can be represented by Basis Functions and by the associated 1553 symbol sequences at any point within the system. Thus, the impulse response w may be obtained by solving the following matrix equation :

$$\Psi w = \phi \qquad\qquad (3)$$

where $\Psi$ is a matrix constructed based on 1553 symbol sequences that have associated basis functions, and $\phi$ is a vector of these associated accumulated basis functions. In this case, IR coefficients can be extracted as follows:

Selecting a valid 1553 symbol sequence and partitioning this sequence into predefined symbol sub-sequences that have Basis Functions associated, and constructing an input matrix $\psi$ based on these symbol sub-sequences.

Constructing vector $\phi$ selecting Accumulated 1553 Basis Functions corresponding to the 1553 symbol sequences in $\psi$ within the $\phi$ selection block 234 .

Solving for the IR coefficients w from (3) within the Calculate IR block 235.

Special advantageous selections of predetermined 1553 symbol sequences with associated basis functions and construction of $\psi$ based on these are possible, such as for allowing for reduction of storage requirements and computation complexity, for further averaging of noise effects in synthesizing a 1553 interference signal.

Advantageously, an overdetermined system representing the matrix equation in (3) may be constructed, therefore accounting for more of the received waveform via accumulated basis functions within $\phi$ and thus further averaging out noise effects, in addition to the averaging effect that have already taken place in obtaining each particular accumulated basis function.

Furthermore, $\Psi$ can be advantageously constructed such that its inverse or its pseudo inverse is a constant multiplied by its transpose.

In some cases, implementing the Extract IR coefficients block 233 based on a circular convolution form of equation (1) as it will be detailed below may provide additional benefits.

The FIR filter 236 uses the IR coefficients and transforms the input reference signal $x(n)$ into a 1553 interference signal, 1553 IS.

Obtaining FIR coefficients using Accumulated Basis Functions

Next, we detail by way of example advantageous techniques of obtaining impulse coefficients w from accumulated basis functions.

Assuming 1553 signaling at about 1 MHz and a sample rate of 80 MHz in the IC and also assuming the non-zero portion of the combined impulse response is less than three 1553 symbols in duration so $N$ can be set to $3 \times 80 = 240$. In this case, an accumulated basis function extracted from samples $n$ to $n+79$ of the resampled second sampled primary signal $\hat{S}_3(n)$, where n is the position of most recent sample of the non-zero impulse, is affected by the three most recent non zero input values which in turn are given by the three most recent 1553 bits. Such a basis function can be designated as

$$\phi_i = [\hat{S}_3(n)\ \hat{S}_3(n+1)\ \dots\ \hat{S}_3(n+N-1)\ ]^T$$

where the subscript i is a basis function tag derived as follows from the three bits that affect the basis function:

$$i = [b_0\ b_1\ b_2][4\ 2\ 1]^T + 1 \qquad\qquad (4)$$

where $b_0$ is the most recent bit, $b_1$ the second most recent and so on. This basis function tagging scheme as it relates to the most recent bit values and the most recent non-zero values in the input sequence is summarized in Table 3.

Table 3: Basis function tagging scheme

| Three most recent bit values $b_0\ b_1\ b_2$ | Most recent non-zero input sequence values | Basis function tag $i$ |
|---|---|---|
| 0 0 0 | -1 -1 -1 | 1 |
| 0 0 1 | -1 -1 1 | 2 |
| 0 1 0 | -1 1 -1 | 3 |
| 0 1 1 | -1 1 1 | 4 |
| 1 0 0 | 1 -1 -1 | 5 |
| 1 0 1 | 1 -1 1 | 6 |

(continued)

| Three most recent bit values $b_0$ $b_1$ $b_2$ | Most recent non-zero input sequence values | Basis function tag $i$ |
|---|---|---|
| 1 1 0 | 1 1 -1 | 7 |
| 1 1 1 | 1 1 1 | 8 |

Under this assumptions, the following matrix equation can be written for basis function $\phi_2$ :

$$\Psi_2 w = \phi_2 \qquad (5)$$

$\Psi_2$ is a 80 by 240 matrix formed from three diagonal sub-matrices as follows

$$\Psi_2 = \begin{bmatrix} \begin{bmatrix} -1 & 0 & 0 & \cdots & 0 \\ 0 & -1 & 0 & \cdots & 0 \\ \vdots & \vdots & \vdots & \ddots & \vdots \\ 0 & 0 & 0 & \cdots & -1 \end{bmatrix} \begin{bmatrix} -1 & 0 & 0 & \cdots & 0 \\ 0 & -1 & 0 & \cdots & 0 \\ \vdots & \vdots & \vdots & \ddots & \vdots \\ 0 & 0 & 0 & \cdots & -1 \end{bmatrix} \begin{bmatrix} 1 & 0 & 0 & \cdots & 0 \\ 0 & 1 & 0 & \cdots & 0 \\ \vdots & \vdots & \vdots & \ddots & \vdots \\ 0 & 0 & 0 & \cdots & 1 \end{bmatrix} \end{bmatrix} \qquad (6)$$

Each of the sub-matrices has its diagonal element determined by one of the three most recent bit values. The diagonal element in the first (leftmost) sub-matrix determined from $b_0$, the second from $b_1$ and so on. Each row of the matrix is all zeros except for a plus or minus one every 40th position and each row is a right cyclic shift of the row above. The matrix is also labeled with the subscript derived from the bit values as in (4).

This matrix equation does not have a unique solution however it can be supplemented with two other basis function equations as follows:

$$\Psi w = \begin{bmatrix} \Psi_1 \\ \Psi_2 \\ \Psi_3 \end{bmatrix} \mathbf{w} = \begin{bmatrix} \phi_1 \\ \phi_2 \\ \phi_3 \end{bmatrix} = \phi \qquad (7)$$

The extended $\psi$ matrix in (7) is square and non-singular so a unique solution for the FIR coefficient vector w can be obtained. Furthermore, solving (7) is simple since the inverse of $\psi$ has only two non-zero entries in each row meaning that each coefficient in the w vector can be computed by summing two elements of the $\phi$ vector in (8).

If the received interfering signal is noiseless the above is sufficient. However, in using accumulated basis functions as described above, the effects of noise can be reduced by averaging over more of the received interfering waveform. The fact that

$$\phi_i = -\phi_{9-i}, \quad i = 5, 6, 7, 8 \qquad (8)$$

can advantageously be used to further average the basis functions tagged 5 to 8 with those tagged 1 to 4. Lastly, the matrix equation (7) can be further extended as follows

$$\Psi' \, \mathbf{w} = \begin{bmatrix} \Psi_1 \\ \Psi_2 \\ \Psi_3 \\ \Psi_4 \end{bmatrix} \mathbf{w} = \begin{bmatrix} \phi_1 \\ \phi_2 \\ \phi_3 \\ \phi_4 \end{bmatrix} = \phi' \qquad (9)$$

so that all 8 possible basis functions of this example are now included allowing more of the received waveform to be included in the averaging and hence further reducing noise effects. Now, the size of the $\Psi'$ matrix in (9) is 320x240 so this is an overdetermined system that can be solved using the pseudo-inverse.

$$\mathbf{w} = \text{pinv}(\Psi')\phi' \qquad (10)$$

Because of the way the $\psi'$ matrix is constructed, the pseudo inverse has four non-zero entries of equal magnitude in each row meaning that four elements of the $\phi$ matrix are summed to produce each element of w. In fact the pseudo-inverse is merely the scaled transpose of $\psi'$.

$$\Psi'^{-1} = \Psi'^T /4 \qquad (11)$$

The procedure outlined here can be extended for $N$ equal to any number of 1553 symbol lengths. For example with N = 320 or four 1553 symbols, there are 8 basis functions in the $\phi'$ vector and the $\psi'$ matrix in the overdetermined system in (9) is of dimension $640\times320$. This would lead to 8 non-zero entries in each row of the pseudo-inverse and which could be computed by transposing the $\psi$ matrix and dividing by 8.

As previously mentioned, an alternative is to use the $BF_{40}$ technique instead of the $BF_{80}$ technique described above. A possible way to proceed with the $BF_{40}$ technique is to use 40 sample long basis functions and treat the extra impulses as extra data bits interleaved with the actual data bits. This technique must deal with bit sequences that are twice as long as the $BF_{80}$ technique for an impulse response of the same length. Also, not all bit sequences will be represented. In the data portion of the 1553 word, no bit sequences with three or more consecutive bits being the same are possible. Therefore, in this case, some of the $\Psi$ submatrices will be missing from equation (9) and the simple relation in (11) for the pseudo inverse would no longer hold.

An alternative $BF_{40}$ technique is to use 80 sample accumulated basis functions, but assume that the non-zero duration of the impulse response is $80\times(2i\text{-}1)/2$ when there are $i$ bits affecting each basis function. For $i$=3, the convolution that produces the basis function $\phi_2$ would take the same form as (5) but with $\Psi_2$ being the following $80\times200$ matrix (only the non-zero matrix entries are shown and there are 39 zeros between the non-zero entries in each row or column):

$$\Psi_2 = \begin{bmatrix} -1 & & 1 & & -1 & & -1 & & 1 & \\ & -1 & & 1 & & -1 & & -1 & & 1 \\ & & -1 & & 1 & & -1 & & -1 & & 1 \\ & & & -1 & & 1 & & -1 & & -1 & & 1 \\ 1 & & & & -1 & & 1 & & -1 & & -1 & \\ & 1 & & & & -1 & & 1 & & -1 & & -1 \\ & & 1 & & & & -1 & & 1 & & -1 & & -1 \\ & & & 1 & & & & -1 & & 1 & & -1 & & -1 \end{bmatrix}$$

In this case, equation (5) can be extended as in (7) and solved for w using the pseudo inverse. This allows all of the possible accumulated basis functions to be used.

Another variation of the BF$_{80}$ technique described above solves for w by performing a circular deconvolution. A circular convolution equation can be written as:

$$\psi(n)^*w(n) = \phi(n), \qquad (12)$$

This can be solved for w(n) in the frequency domain using the FFT and IFFT. Advantageously, in order to eliminate the need for FFT and IFFT operations, the function $\psi(n)$ is chosen as the 320 point sequence given by

$$\psi(n) = \begin{matrix} 1, & n = 0 \\ -1, & n = 80,160,240 \\ 0, & \text{otherwise} \end{matrix} \qquad (13)$$

The function $\phi(n)$ is formed by concatenating accumulated basis functions in such a way that they form a single period of the signal that would be produced by a periodic extension of $\psi(n)$. For the case where the non-zero portion of $w(n)$ is less than three 1553 symbols in duration, there are 8 basis functions. FIG. 14 shows a periodic extension of $\psi(n)$ indicating that the three non-zero values affecting the points $\phi(0)$ to $\phi(79)$ are 1, -1 and -1 corresponding to the bit sequence 100. Consequently this portion of $\phi(n)$ is set equal to the basis function $\phi_5 = -\phi_4$. The next 80 points of $\phi(n)$ are affected by the non-zero $\psi(n)$ values -1, 1, -1 corresponding to bit sequence 010 so $\phi_3$ is used here. Similar reasoning indicates that the final 160 points of $\phi(n)$ are filled by $\phi_2$ and $\phi_1$. At this point the basis functions tagged 1 to 4 are all used and because of relation (9), all basis functions are used.

The impulse response $w(n)$ can be obtained by circular deconvolution which is easily implemented using the discrete Fourier transform (DFT).

The circular convolution can also be written as the following matrix equation.

$$\begin{bmatrix} \psi(0) & \psi(N-1) & \psi(N-2) & \dots & \psi(1) \\ \psi(1) & \psi(0) & \psi(N-1) & \dots & \psi(2) \\ \psi(2) & \psi(1) & \psi(0) & \dots & \psi(3) \\ \vdots & \vdots & \vdots & \ddots & \vdots \\ \psi(N-1) & \psi(N-2) & \psi(N-3) & \dots & \psi(0) \end{bmatrix} w = \phi \qquad (14)$$

where,

$$\phi = \begin{bmatrix} \phi(0) & \phi(1) & \cdots & \phi(N-2) & \phi(N-1) \end{bmatrix}^T \qquad (15)$$

$$w = \begin{bmatrix} w(0) & w(1) & \cdots & w(N-2) & w(N-1) \end{bmatrix}^T \qquad (16)$$

The matrix $\Psi$ in (15) is non-singular and its inverse is also given by (12). Furthermore each row of the inverse has only 4 non-zero entries so each point of w is computed by summing 4 elements of the $\phi$ vector.

This procedure can be extended to the case where there non-zero portion of the impulse response is up to 4 1553 symbols in duration. In this case only half of the 16 possible basis functions are included in the equation so less of the received waveform is used for averaging.

Media Access Controller (MAC) implications

In a typical 1553 network, there are multiple 1553 transmitters which from a non-1553 receiver point of view have different impulse responses. An Interference Cancellation system according to the embodiments of the invention operates independently on each 1553 interference source. Therefore, advantageously, accumulated Basis Functions, clock error estimates, IR coefficients as well as other possible interference cancellation parameters can be calculated, integrated and stored for each transmitter $TX_i$ on the network, as $IC_{TXi}$. Furthermore, standard 1553 networks operate with a command/response media access and only one 1553 device transmits at a time, with a Bus Controller broadcasting which remote transmitter $TX_i$ will be transmitting next. This a priori information can be used to preload $IC_{TXi}$ information for applying it for Interference cancellation, thereby reducing the latency and buffering required for decoding a 1553 message before passing the signal to a non-1553 receiver. 1553 messages also contain source address information which can be used to identify particular transmitters. In the preferred embodiments, 1553 timing is calculated for each word/message.

Time can be reserved where there are non-1553 modem does not transmit in order to train interference cancellation parameters to obtain better estimates. Alternately, the training can be done with non-1553 signaling on the bus and integration time constants can be adjusted to meet the particular fidelity requirements of the bus configuration and application.

Bus Redundancy

1553 is generally utilized for hard real time communications, where a message is expected to be communicated over the bus in a deterministic way with known latency and very low probability that the message is not decoded successfully. For such critical communications, MIL-STD-1553 specifies a primary data bus and a redundant (default) bus, providing communications path redundancy ("dual bus redundancy"). For dual redundant bus applications, 1553 requires that a 1553 receiver (not shown) be capable of listening to and decoding commands on the primary and the redundant bus at the same time. A 1553 terminal (not shown) transmits 1553 signals on only one bus at a time. Redundancy can be extended to more than 2 buses.

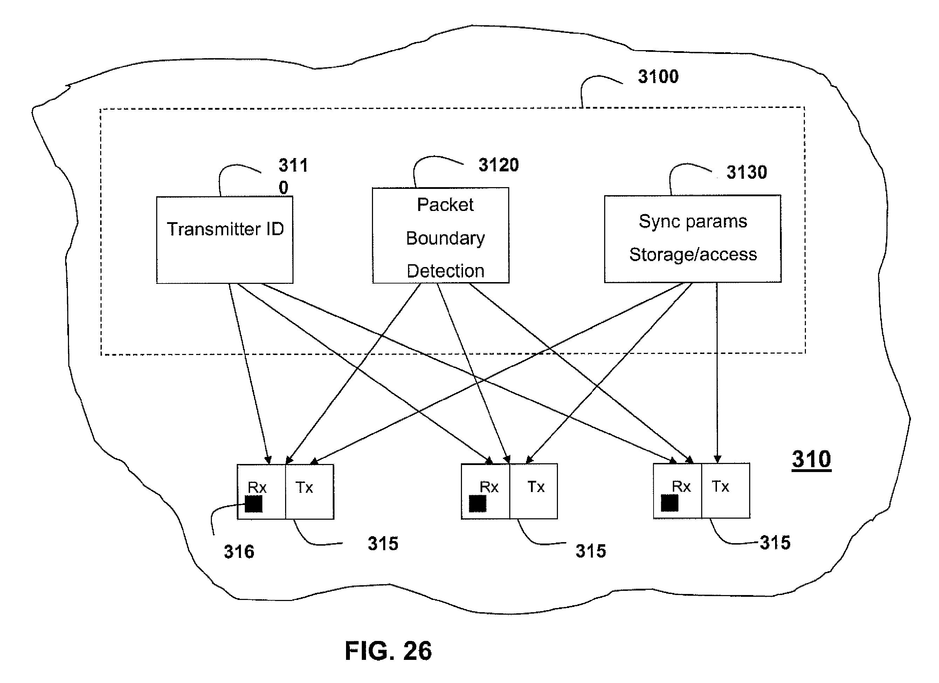

In a dual redundant system comprising a 1553 communication system and a non-1553 communication overlay network, a non-1553 terminal may have the same topology as a standard 1553 terminal, comprising a receiver associated with each bus and receiving on both buses concurrently. Alternatively, as illustrated in FIG. 26, a non-1553 terminal 20 may comprise a single non-1553 receiver 70 along with a receive path selection block 40. Within the receive path selection block 40, a decision based on predefined selection criteria is made regarding establishing a receive path between the single non-1553 receiver of the terminal and one of the data buses 51, 52.

The 1553 Interference Cancellation architecture according to the present invention can be associated with non-1553 receivers in various ways that would be obvious to someone skilled in the art. However, preferably, the Interference Cancellation system 100 is electrically connected to primary and redundant buses in the non-1553 frequency band and performs interference cancellation of the 1553 signals on non-1553 signals to be decoded at the non-1553 receiver in advance of selecting a receive path between the non-1553 receiver and one of the buses. This configuration provides flexibility in allowing the non-1553 receiver to operate in various configurations, either receiving from one bus at a time or receiving from both busses concurrently, while still having 1553 interference signals cancelled out, regardless of possible timing issues related to switching between buses.

The above embodiments have been described particularly with respect to 1553 communication systems having an overlaid non-1553 communication system. However, it will be understood that this invention is applicable to other communication systems having at least a first signaling method A and a second signaling method non-A. As discussed for 1553 and non-1553 signals, at a basic level A and non-A signals, can be produced via any two signaling schemes allowing for their differentiation by methods known in the art. In particular, the Interference Cancellation system and method using Basis Functions are well suited when Basis Functions can be easily defined, such as when first signaling method A has low complexity. Furthermore, the Interference Cancellation system and method using Basis Functions are useful when through the extraction of Basis Functions from mixed signals, mixed in components present due to communication via the non-A signaling scheme substantially cancel out. Ethernet is a particular example of a communication system technology where the invention is also applicable. Other communication systems utilizing Manchester encoding as the first signaling method A, can make use of the present invention.

FIG. 26 illustrates a packet switched network 310 comprising a synchronization system 3100 according to an embodiment of the invention. The network 310 can be any packet switched networks known in the art. Advantageously, synchronization system 3100 would be used within a packet switched network 310 where the topology does not change significantly, from a signal timing point of view, over a relatively long period of time, substantially greater than the duration of a typical transmitted waveform. Most packet-based networks over fixed length connections, either wireless or wired, fit this requirement.

The synchronization system 3100 has a transmitter identification system 3110, a packet boundary detection system 3120 for detecting synchronization parameters and a storage-access system 3130 for storing/accessing synchronization parameters. The transmitter identification system 3110, packet boundary detection system 3120 and storage-access system 3130 are all connected to terminals 315 within the packet switched network, via either wireless or wired communication media or a combination of these.

For every received packet of information at a given receiving terminal 315, the transmitter identification system 3110 communicates to the receiving terminal 315 the identity of the originating transmitter terminal 315. The communication of the identity of originating transmitter occurs prior to the reception of the given packet of information at the receiver, sufficiently in advance to allow retrieval of associated synchronization parameters by the receiver and receiver adjustment based on these parameters, for the purpose of decoding the packet. In practice, the transmitter identification system 3110 can be implemented by various means known to someone skilled in the art, including, without limitation, command/response media access protocols, a transmission schedule shared by all terminals on a bus, or priority signaling scheme where each terminal asserts priority during a priority signaling interval and each terminal unambiguously determines the outcome of the priority signaling to know which terminal is to transmit next, etc.

The packet boundary detection system 3120 enables detection of packet synchronization parameters for transmitter-receiver pairs of terminals 315 within the network 310. Synchronization parameters may include any parameters useful in synchronizing received frames with a internal reference system of the receiver 316, such as time alignment parameters indicating boundaries of a frame structure relative to the reference timing system of a given receiver, frequency parameters indicating frequency offsets relative to a reference frequency system, gain control parameters, etc. The packet boundary system 120 may detect packet synchronization parameters by any means known in the art, such as by use of a correlation receiver that correlates incoming waveforms with a known transmitted waveform.

The storage-access system 3130 allows for storage of synchronization parameters for transmitter-receiver terminal pairs as detected via the packet boundary detection system 3120, as well as for access of the synchronization parameters by the transmitter-receiver terminal pairs as required for decoding incoming packets at a receiving terminal. Any network topology change affecting some or all synchronization parameters requires an update of associated synchronization parameters.

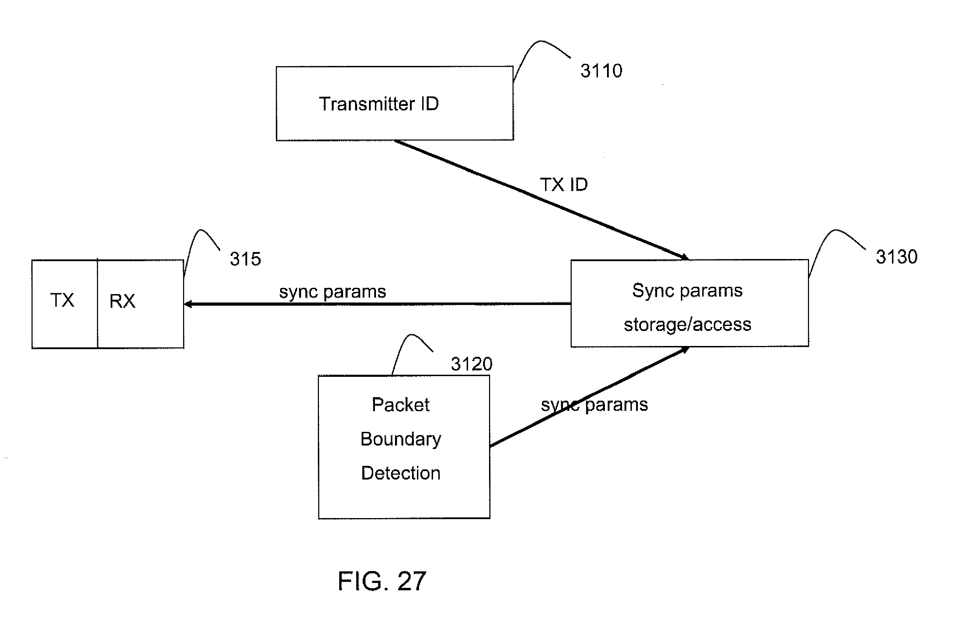

FIG. 27 illustrates the operation of the synchronization system 3100, with respect to a given receiving terminal 315, according to one aspect of the invention. The identity of the originating transmitter TX ID for an incoming packet of information is communicated by the transmitter identification system 3110 to the storage-access system 3130. If synchronization parameters corresponding to the received TX ID are not available within the storage-access system 3130, the packet boundary detection system 3120 obtains (i.e. detects and calculates/estimates) synchronization parameters with respect to the corresponding transmitter and sends them for storage to the storage-access system 3130. If synchronization parameters corresponding to the received TX ID are already available within the storage-access system 3130, these synchronization parameters are communicated to the receiver, which is adjusted based on them to allow decoding of incoming packet.

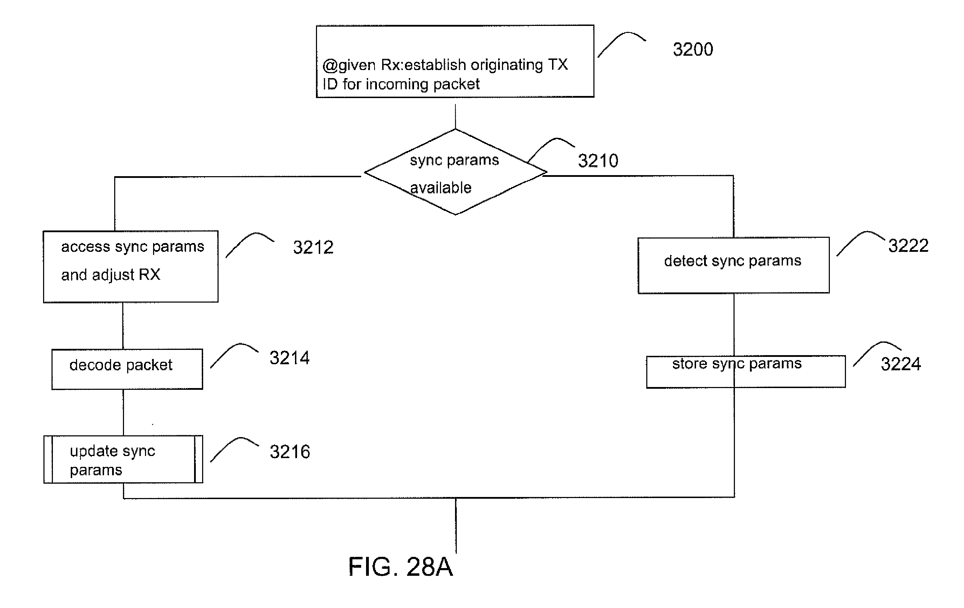

FIG. 28A is a flow chart for a method of packet synchronization within a packet switched network at a receiver terminal within the network, according to a first embodiment of the invention. The method comprises the initial step of detecting the identity of the originating transmitter TX ID for the incoming packet of information 3200. This step occurs prior to receiving the incoming packet, preferably allowing sufficient time to allow retrieval of synchronization parameters, if available, and adjustment of receiver based on these parameters, for accurate reading of the incoming packet. If synchronization parameters are available for the detected TX ID, step 3210, then the receiver accesses synchronization parameters, step 3212, and used in adjusting the receiver for decoding the incoming packet, step 3214. Optionally, information from the incoming packet can be used to update existing synchronization parameters, step 3216. If synchronization parameters are not available for the detected TX ID, step 3210, they are detected, step 3222, and stored, step 3224.

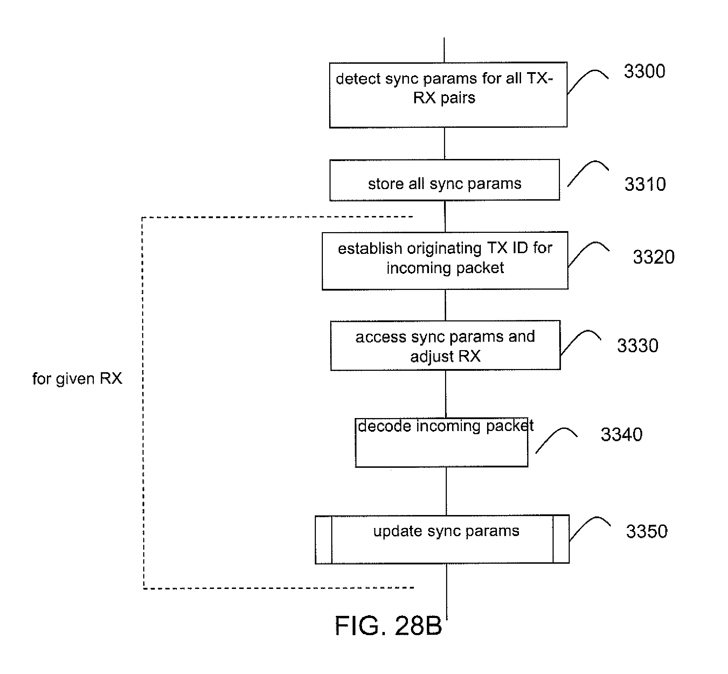

An alternate embodiment for a method of packet synchronization within a packet switched network at a receiver terminal within the network is illustrated in FIG. 28B. In this case, synchronization parameters for all transmitter-receiver (TX-Rx) pairs within the networks are detected and determined (i.e. calculated/estimated), step 2300, and then stored, step 2310. Next, at a given receiver, the identity of the originating transmitter, TX ID, for the incoming packet of information is established, step 2320. Same considerations with respect to timing apply as in the case of the embodiment in FIG. 28A. Next, the given receiver accesses the corresponding synchronization parameters, step 3330, and uses them for decoding the packet, step 3340. Optionally, information from the incoming packet can be used to update existing synchronization parameters, step 3350.

In some cases, separating synchronization parameters into global synchronization parameters and local synchronization parameters may present advantages in terms of system robustness and complexity. The local synchronization parameters are defined as parameters that are adjusted locally, at a given receiver. Global synchronization parameters are the complementary set, i.e. are parameters that are adjusted at a remote location from a given receiver, such as at the transmitter. As an example, the timing offset T for a given transmitter-receiver pair on the network with respect to the internal reference timing systems of the transmitter and receiver can be a synchronization parameter that may be split into a global timing delay $T_{global}$ and a local delay $T_{local}$, with $T \approx T_{global} + T_{local}$. Once T is measured, packets can be transmitted between the transmitter-receiver pair by adjusting for $T_{global}$ at the transmitter, i.e. advancing transmission of the packet by $T_{global}$, and adjusting for $T_{local}$ at the receiver. Advantageously, for a larger network, all transmitters may transmit packets by taking into account the average time delay on the network, therefore increasing the overall alignment of the system.

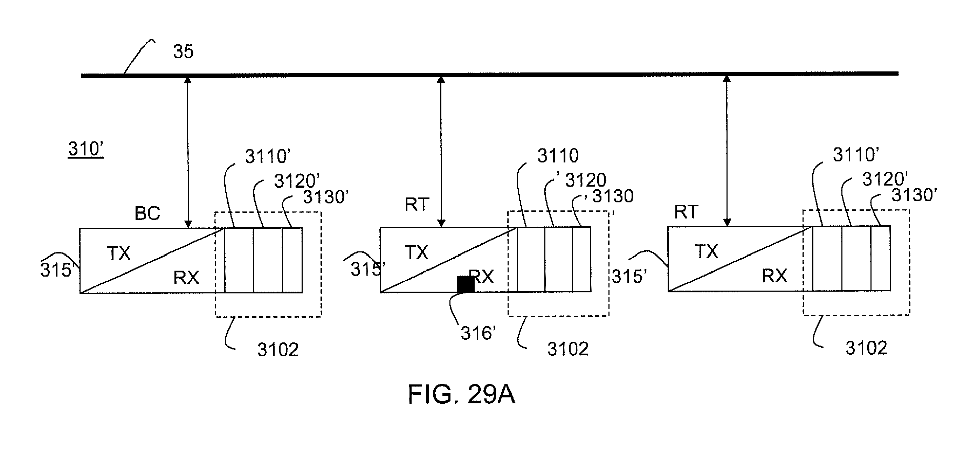

Referring now to FIG. 29A, a synchronization system according to the preferred embodiment of the invention is used within a packet switched network 310' in which Orthogonal Frequency Division Multiplexing (OFDM) encoded packets are communicated over a MIL-STD-1553 data bus 35. The synchronization system comprises transmitter identification modules 3110', packet boundary modules 3120' and storage-access modules 3130'. Each terminal within the network has functionally and physically associated its own triplet of modules 3110', 3120', 3130'.

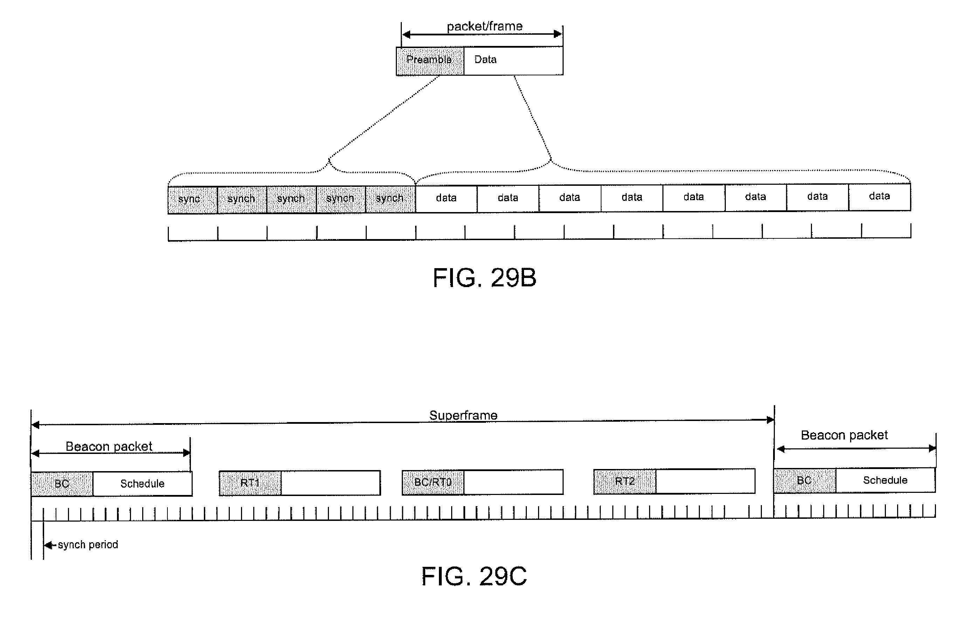

FIG. 29B illustrates a packet of information as used in the preferred embodiments of the invention, the packet comprising a preamble part, made of synchronization symbols and a data part, made of data symbols.

One of the terminals 315' is designated as Bus Controller (BC) terminal and periodically transmits a bus control message on the bus, known as a *beacon packet* or *beacon frame.* The remaining terminals 315' are known as Remote Terminals (RT's). The bus control message undergoes distortion and propagation delays on the bus. Referring also to FIG. 29C, a Superframe comprises all packets seen by a terminal between the start of a beacon packets and the start of the following beacon packet. Thus, a Superframe starts with a BC beacon packet including a transmission schedule for all RT's and further comprises RT packets received from individual RTs. The BC and RT designations are in the logical sense rather than in a hardware manner, meaning that any terminal 215' can be promoted BC. Also, any designated BC can also act as an RT, scheduling RT-like transmissions for itself within a Superframe. In FIG. 29C, the BC schedules itself to transmit as RT0, following transmission of RT1 and prior to transmission of RT2. As the length of the individual packets and preambles can be variable (and programmable), the length of the Superframe can also vary and may start at any multiple of a sync symbol period.

In operation, synchronization or alignment of OFDM packets or frames is advantageously carried out as a two-step process. First step, S1, allows for preamble or sync symbol alignment at a given receiver relative to a given transmitter based on the first k packets sent by the transmitter to the receiver, where k is an integer of a preset value. Second step, S2, allows for frame alignment for all subsequent packets sent by the transmitter to the receiver.

Specifically, within the first alignment step S1, the receiver terminal within a given transmitter-receiver pair of terminals acquires timing information about sync symbol boundaries of packets incoming from the transmitter of the pair, relative to the receiver's reference timing system 216', via its associated packet boundary detection module 2120'. At the completion of the first alignment step S1, the receiver would know, relative to its reference timing system, the time when sync symbols of packets from the transmitter of the given pair may begin and end. This timing information is a synchronization parameter herein referred to as a *sync symbol boundaries* parameter. Once acquired, the sync symbol boundaries parameter is stored within the storage-access module 2130' of the given receiver. For every transmitter-receiver pair, the first alignment step S1 requires at least one frame being analyzed by the receiver's packet boundary module 2120', but k frames may be used, where k is an integer of a preset value. According to this embodiment, data within frames used for the first alignment step S1 needs not be decoded.

For example and without limitation, within each RT, the first alignment step S1 occurs the first time the BC transmits a packet to the RT. Because there has been no previous transmission, the synch symbols of the BC frame arrive at the given RT's interface to the bus at an unknown time with respect to the given RT's internal reference timing system 216'. The RT determines the presence of the BC packet using its associated packet boundary module 2120', by detecting the presence of synch symbols on the bus.

In the case of OFDM packets, a frame of information consists of a preamble containing synchronization symbols followed by a number of data symbols. In the preferred embodiment, the preamble contains 25 synch symbols and the data comes in multiples of 8 data symbols, the 8 data symbols corresponding to the length of a FEC coding block, in this case. Preferably, the sync symbols are periodic and phase continuous at the symbol boundaries. Furthermore, in the preferred embodiment, synch symbols are linear frequency modulated (LFM). In particular, synchronization symbols are generated based on a method or using a bandwidth configurable modem as described in co-pending United States Patent Application No. 11/332,395 "Approximate Linear FM Synchronization Symbols for a Bandwidth Configurable OFDM Modem" incorporated here by reference. The sync symbols and the data symbols may not be the same size and there may be null intervals between frames. Preferably, the sync symbols are large with respect to the worst case timing delay between any two terminals 215' within the network. Advantageously, the sync symbols may be programmable in length, for accommodating various changes in network topology from a timing point of view.

The packet boundary detection module 2120' of the RT is used for detecting synchronization symbols, declaring packet detection and obtaining a sync symbol boundaries parameter with respect to the RT's internal reference timing system. Advantageously, the packet boundary detection module 2120' is a block based receiver that does a correlation over a fixed range of samples, thereby reducing the number of computations required. The correlation may be done in the time or frequency domain. In the preferred embodiment, given the periodic nature of the synch symbols, a Fast Fourier Transform (FFT) is employed to do the block based detection processing representing a circular convolution. A threshold detector is used to indicate whether a synch symbol is present. If an Automatic Gain Control (AGC) is required for a particular application of the packet switched network, signal levels may be pre-adjusted in order not to saturate the receiver front end.

The number of detections required to trigger preamble detection may vary, but since the timing of first received BC packet is unknown, and the block based processing at the receiver may not capture all of the signal energy during one processing interval, the number of detects may vary depending on the noise conditions. The receiver may process blocks based on independent samples or may overlap samples to improve performance.

The packet boundary detection module 2120' may declare sync symbol alignment when p out of N-1 sync symbols are detected via the block based receiver, where p smaller than or equal to N-1, and N is the number of sync symbols within preamble. Requiring N-1 synch detections to trigger preamble detection enhances the probability of detection and reduces the false detect rate. In the preferred embodiment, since the preamble of a BC frame contains 5 sync symbols, detecting 4 consecutive sync symbols triggers preamble detection.

The sync symbol boundaries parameter takes into account analog and digital processing delays encountered by a packet originated by the BC and traveling to the given RT. Once obtained, the sync symbol boundaries parameter is stored in the storage-access module 2130' associated with the given RT.

The second alignment step S2 of the packet synchronization process occurs for all packets sent by the BC subsequent to the packet(s) used in obtaining the sync symbol boundaries parameter. Within this second step, a receiving RT retrieves the sync symbol boundaries parameter from its storage-access module 130' and adjusts its receiver's timing such that the receiver is pre-aligned to the incoming waveform. Once the RT has aligned its receiver to the expected symbol timing, N successive successful synch detections are required to declare frame alignment for an OFDM packet with N sync symbols, such as 5 for the preferred embodiment. Advantageously, this increases accuracy of frame detection, as the block processing at the receivers will capture all the signal energy for each synch. There will be negligible synch symbol energy at all other times, thus reducing the false detect rate. Since the optimum AGC level had been already established for detecting the BC frame in step S1, this can be maintained and updated for detecting and decoding the subsequent frame. BC frame subsequent to the frame(s) used in the first alignment step S1 are transmitted and understood by all other RT's to be sync symbol aligned, i.e. there is no indeterminism regarding synch boundaries, for some reasonable duration.

In the preferred embodiment, while the network topology does not changed significantly from a timing point of view, once a given RT is aligned to the BC, it is approximately aligned to all other RT's and the two-step synchronization process is not required for this given RT to align to every other RT. More generally, once existent terminals within the networks are approximately aligned to each other, every terminal that starts-up or recovers from an error condition must only align itself to at least one other terminal, in order to be aligned with the rest of the terminals. Specifically, in the event an RT starts-up or recovers from an error condition such as due to noise factors, and as such, cannot decode messages and does not understand frame alignment or schedules, but the network topology has not changed significantly from a timing point a view, the RT can adjust itself by attempting to detect N synchs in a row to declare frame alignment, i.e. by undergoing only step S2 of the synchronization process. Therefore, decoding the next packet can be carried out with a single synchronization step rather than with the two-step synchronization process.

In general, the two-step synchronization process occurs whenever it is assumed the network topology has changed significantly from a timing point of view. In addition, in the preferred embodiment the two-step synchronization process occurs for the alignment of every RT with the BC.

Preferably, RT packets have the same structure as BC packets, with the exception of sync symbols, i.e. RT synch symbols are not the same as BC sync symbols. This helps distinguishing an RT synch from a BC synch, preventing improper detections during the start-up or recovery process of an RT. However, advantageously, the time duration of BC and RT sync symbols is substantially similar, and they are distinguishable by other properties. Time reversing RT sync symbols compared to BC sync symbols is an example of differentiating these sync symbols, but other methods known in the art may also be used.

Following successful frame alignment after completion of second alignment step S2, data symbols of all frames except maybe for those used in first alignment step S1, may be decoded by the receiver. In the preferred embodiment, the Bus Controller includes a schedule in the transmitted message specifying the transmission order for all terminals, including itself. Other information may be included in the schedule, such as destination RT, whether acknowledgement information is required, status information etc. The transmission duration for each terminal is also included in the BC control message. Alternatively, the transmission duration for an RT could be included in the RT's transmitted message. All terminals will decode BC message in order to understand the schedule.

RT's also recover their clock within some reasonable degree of accuracy from the signal transmitted by the BC. This can be done with either digital or analog circuits or a combination of the two and using software or hardware. This clock is used to control the terminals' understanding of time. In some systems such as higher order Quadrature Amplitude Modulation (QAM) based systems and systems communicating long packets, clock recovery may be a significant step to in achieving and maintaining high data throughput. Other systems, such as Differential Quadrature Phase Shift Keying (DQPSK) based systems communicating short packets, may not have their data throughput depending so much on the clock recovery process.

An additional delay, such as the average time delay on the bus, may be added to when the signal is transmitted as long as all the other terminals are aware of it. This would increase overall alignment of the system, making the system more robust in situations such as local failures of RT's.

If it is the first time a given RT transmits, all other terminals, being aware of which terminal is transmitting next based on the received BC schedule, will measure the signal timing of the given RT transmitted signal with respect to their internal reference system. The signal timing of the given RT transmitted signal may include the given RT's sync symbol duration. The measured signal timing is stored within the storage-access modules 130' of all other terminals, for further use the next time the given RT transmits. It is assumed for the preferred embodiment that the difference in the RT sync symbol timing relative to the BC sync symbol timing is small compared to the sync symbols duration, therefore the acquisition by one RT of another RT's transmission can occur without the two step process. Alternately, the two-step process could be carried out for each RT, following the same approach as for the BC.

Preferably, if an AGC is employed, the signal energy at the receiver can also be measured and set appropriately for decoding the RT frame. This process can also be done as a two-step process over two RT frames.

If it is not the first time an RT transmits, all other terminals, including the BC, access the associated synchronization parameters from their storage-access modules 2130' and pre-adjust their receiver to appropriately align to the received signal in order to detect the maximum available synch signal energy. This enables optimal detection of the received signal. The information for all the proper alignments and gain settings are stored in a receiver for all other RT's and BC transmission that it needs to decode.

When the communication topology does not change over long time intervals, synchronization parameters such as synch symbol boundaries and gain settings can be integrated over several frames, to improve the estimate.

In the preferred embodiment, once the network is substantially aligned, i.e. all RT's are aligned to the BC and synchronization detection is no longer required , additional parameters can be used to assess and possibly improve the operation of the system. For example, once the system is aligned, functions like Cyclic Redundancy Check (CRC), Forward Error Correction (FEC) can be used in updating sync parameters algorithms, to make the system more robust to impulse noise or other such system conditions that would render updating more or less desirable at certain system states.

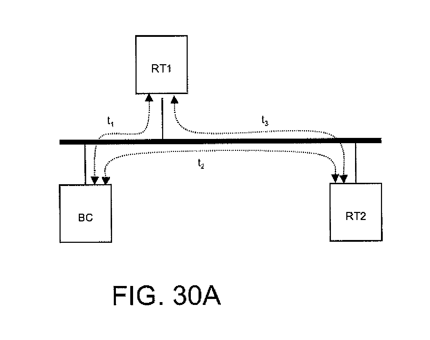

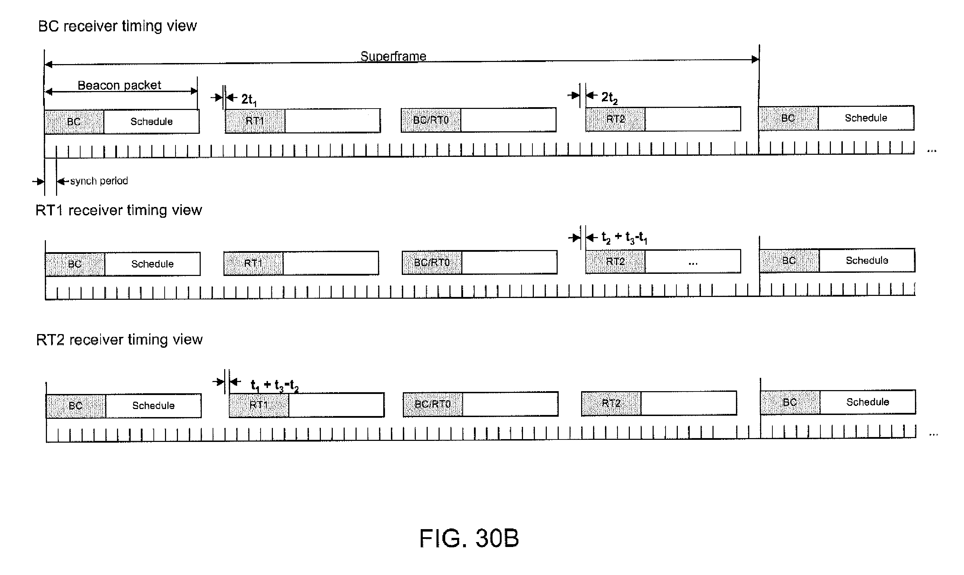

FIG. 30A illustrates a networks comprising a BC, RT1 and RT2, according to the preferred embodiment of the invention. The propagation delays between the terminals are $t_1$, between BC and RT1, $t_2$, between BC and RT2 and $t_3$, between RT1 and RT2, respectively. FIG. 5B illustrates the timing view at the receivers of BC, RT1 and RT2 associated with the network in FIG. 5A, after synchronization to the BC and to the specific terminal has occurred. The BC is always aligned to its own transmission since it is the timing reference for the network. An RT is also always aligned to the BC and to its own transmission which has been synchronized to the BC at the RT interface. The timing delays illustrated represent what the respective terminal would still need to account for in order to be symbol aligned to the packets transmitted by terminals within the network other than the BC or itself.

Bus Redundancy

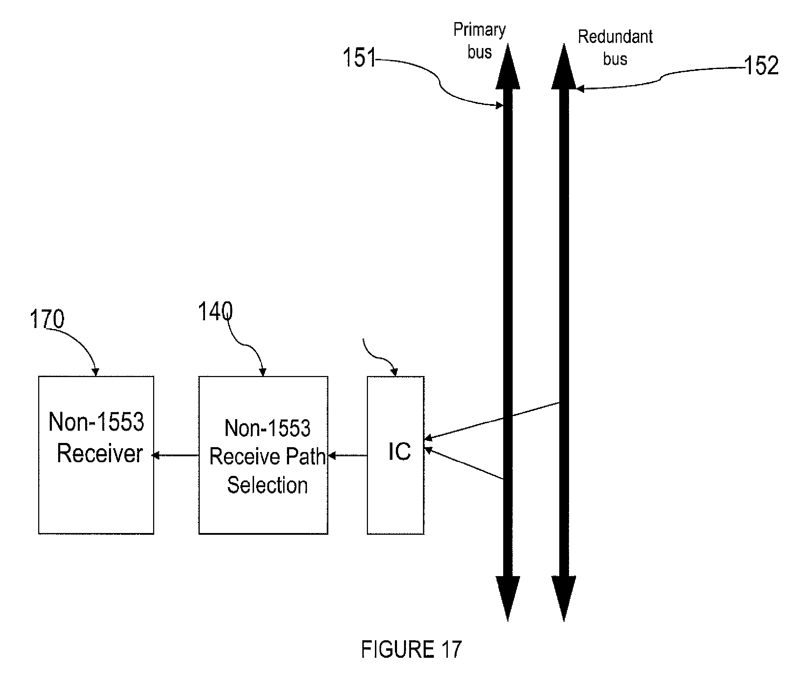

1553 is generally utilized for hard real time communications, where a message is expected to be communicated over the bus in a deterministic way with known latency and very low probability that the message is not decoded successfully. For such critical communications, MIL-STD-1553 specifies a primary data bus and at least one redundant (default) bus, providing communications path redundancy ("dual bus redundancy"). For dual redundant bus applications, 1553 requires that a 1553 receiver (not shown) be capable of listening to and decoding commands on the primary and the redundant bus at the same time. A 1553 terminal (not shown) transmits 1553 signals on only one bus at a time. Redundancy can be extended to more than 2 buses. In a dual redundant system as shown in Figure 17, a non-1553 terminal may comprise a single non-1553 receiver 170 along with a receive path selection block 140. Within the receive path selection block 140, a decision based on predefined selection criteria is made regarding establishing a receive path between the single non-1553 receiver of the terminal and one of the data buses 151, 152.

For such a system, but also in general for packet-switched networks with a bus redundancy feature, synchronization parameters as describe above can be detected, determined, stored and access on a per bus basis. For the preferred embodiment featuring an OFDM overlay network on a 1553 dual-redundant bus, synchronization parameters take into account the transmission of OFDM packets by each terminal on the primary and redundant buses and the reception of packets on either bus, depending on predefined bus selection criteria. Accordingly, bus specific synchronization parameters may be detected, estimated, stored, accessed and used for synchronization.

The invention also includes other aspects that are listed hierarchically in the following numbered paragraphs:

1. Within a 1553 data communication system having a primary data bus and a redundant data bus, a non-1553 data communication overlay system comprising:

a non-1553 bus controller terminal and a non-1553 remote terminal, wherein each non-1553 terminal includes:

a non-1553 transmitter block connected to the primary bus and the redundant bus for sending non-1553 signals;

a non-1553 receiver block for receiving non-1553 signals; and

a non-1553 receive path selection block for selectively establishing a receive path between the primary data bus or the redundant data bus and the non-1553 receiver block according to predefined receive path selection criteria.

2. A 1553 data communication system having a primary data bus and a redundant data bus and a non-1553 data communication overlay system, the non-1553 data communication overlay system comprising:

a non-1553 bus controller terminal and a non-1553 remote terminal, wherein each non-1553 terminal includes:

a non-1553 transmitter block connected to the primary bus and the redundant bus for sending non-1553 signals;

a non-1553 receiver block for receiving non-1553 signals; and

a non-1553 receive path selection block for selectively establishing a receive path between the primary data bus or the redundant data bus and the non-1553 receiver block according to predefined receive path selection criteria.

3. The non-1553 data communication overlay system as defined in paragraph 1, wherein the non-1553 data communication system comprises a plurality of non-1553 remote terminals communicating with the non-1553 bus control terminal over one of the primary data bus and the redundant data bus.

4. The non-1553 data communication overlay system as defined in paragraph 1, wherein the data communication is according to MIL-STD-1553B communication standard.

5. The non-1553 data communication overlay system as defined in paragraph 1, wherein the data communication is according to Notice 2 of MIL-STD-1553B communication standard.

6. The non-1553 data communication overlay system as defined in paragraph 1, wherein each non-1553 terminal comprises OFDM modems.

7. The non-1553 data communication overlay system as defined in paragraph 1, wherein said non-1553 signals are OFDM signals.

8. The non-1553 data communication overlay system as defined in paragraph 1, wherein said non-1553 signals are bandwidth configurable according to channel conditions of the 1553 data communication system.

9. The non-1553 data communication overlay system as defined in paragraph 7, wherein the OFDM signals are Power Spectral Density (PSD) configurable according to the topology of the 1553 data communication system.

10. The non-1553 data communication overlay system as defined in paragraph 9, wherein the OFDM signals are configured to have a low PSD in a 1553b high energy frequency band and a substantially flat high PSD in a 1553b low energy frequency band.

11. The non-1553 data communication overlay system as defined in paragraph 10, wherein said 1553b high energy band is from approximately 0MHz to approximately 5MHz.

12. The non-1553 data communication overlay system as defined in paragraph 10, wherein the OFDM signals have a substantially high flat PSD from approximately 5MHz to a frequency approximately equal to or greater than 35 MHz.

13. The non-1553 data communication overlay system as defined in paragraph 2, wherein said receive path selection criteria include performance metrics of said non-1553 signals on said buses.

14. The non-1553 data communication overlay system as defined in paragraph 13, wherein said performance metrics include one or more of Bit Error Rate (BER), Signal to Noise ratio (SNR), channel capacity metrics.

15. The non-1553 data communication overlay system as defined in paragraph 14, wherein the non-1553 receive path selection unit monitors performance metrics of said non-1553 signals periodically.

16. The non-1553 data communication overlay system as defined in paragraph 14, wherein the non-1553 receive path selection unit further averages monitored performance metrics of said non-1553 signals over predefined time intervals.

17. A 1553 data communication system comprising:

a primary data bus;

a redundant data bus;

a 1553 bus controller terminal and a plurality of 1553 remote terminal, each 1553 terminal comprising:

a 1553 Transmitter block;

an analog switch, for selectively connecting the 1553 transmitter block either to the primary bus or to the redundant bus according to a predefined receive path selection criteria and according to bus fault design;

a first 1553 receiver block for receiving 1553 signals from the primary bus, under no-bus fault conditions; and

a second 1553 receiver block for receiving signals from the redundant bus under bus-fault conditions;

a non-1553 bus controller terminal and a plurality of non-1553 remote terminals, each non-1553 terminal comprising:

a non-1553 transmitter block connected to the primary bus and the redundant bus for sending non-1553 signals on the primary bus and on the redundant bus;

a non-1553 receiver block; and

a non-1553 receive path selection block for monitoring the performance of the primary bus and of the redundant bus and for establishing a receive path between the non-1553 receiver block and either the primary bus or the redundant bus based on performance metrics

18. The 1553 data communication system as defined in paragraph 15, wherein the non-1553 signals are bandwidth configurable and PSD configurable OFDM signals, wherein the bandwidth and PSD of OFDM signals are configured according to channel conditions of the primary bus and of the redundant bus

19. The 1553 data communication system as defined in paragraph 15, wherein the performance monitoring comprises periodically determining metric values, wherein metrics are selected from the group of SNR, BER, capacity and averaging said metric values over a predetermined time interval.

20. A communication method over a 1553 communications network, comprising the steps of:

transmitting 1553 signals over a primary bus under no bus fault conditions;

transmitting 1553 signals over a redundant bus under bus-fault conditions;

receiving 1553 signals from the primary bus and from the redundant bus;

transmitting non-1553 signals over the primary bus and over the redundant bus;

selecting a non-1553 receive path between one of the primary bus and the redundant bus and a non-1553 receiver based on a predefined selections criteria; and

receiving non-1553 signals on the selected non-1553 receive path.

21. Within a packet switched communication network comprising a plurality of terminals for sending and receiving packets of information, a synchronization system comprising:

a transmitter-identification system for communicating to each receiving terminal within the network the identity of the originating transmitter terminal for a given packet of information, said communication of the transmitter identity occurring prior to the reception of the given packet of information;

a packet-boundary detection system for enabling detection of packet synchronization parameters for all transmitter-receiver pairs of terminals within the network; and

a storage-access system for storage of detected packet synchronization parameters and for allowing access by the receiver within the corresponding transmitter-receiver pair to access said packet synchronization parameters.

22. The synchronization system as defined in paragraph 21, wherein said packets of information are based on Orthogonal Frequency Division Multiplexing (OFDM) modulation technique.

23. The synchronization system as defined in paragraph 21, wherein the transmitter identification system comprises a Bus Controller periodically transmitting a bus control message on the bus.

24. The synchronization system as defined in paragraph 21, wherein the transmitter identification system comprises transmission schedule means for sharing a transmission schedule among all terminals.

25. The synchronization system as defined in paragraph 21, wherein the transmitter identification system comprises priority signaling means for enabling each terminal to assert priority during a priority signaling interval and for enabling each terminal to acknowledge priority signaling intervals for other terminals.

26. The synchronization system as defined in paragraph 21, wherein the packet boundary detection system comprises a synch symbol alignment subsystem, for detecting synch symbol boundaries with respect to a given receiver's reference timing system.

27. The synchronization system as defined in paragraph 21, wherein the packet boundary detection system comprises means for performing synch symbol alignment at a receiver based on a single packet.

28. The synchronization system as defined in paragraph 21, wherein the packet switched network comprises a Bus Control (BC) terminal sending a bus control message to a plurality of Remote Terminals (RT's).

29. The synchronization system as defined in paragraph 21, and wherein BC packets and RT packets are different only with respect to sync symbols within the packet preamble.

30. The synchronization system as defined in paragraph 21, wherein the packet boundary detection system comprises a correlation receiver.

31. The synchronization system as defined in paragraph 21, wherein the packet boundary detection system comprises a block based receiver for performing correlation over predetermined number of samples.

32. The synchronization system as defined in paragraph 21, wherein the packet boundary detection declares sync symbol alignment when p out of N-1 sync symbols are detected via the block based receiver, where k smaller than or equal to N-1, and N is the number of sync symbols within preamble.

33. The synchronization system as as defined in paragraph 21, wherein each packet has a preamble having a plurality of periodic synch symbols.

34. The synchronization system as defined in paragraph 21, wherein each packet has a preamble having a plurality of phase continuous synch symbols.

35. The synchronization system as defined in paragraph 21, wherein synchronization parameters include relative timing offsets of packet boundaries with respect to internal reference timing systems of receiving terminals.

36. The synchronization system as defined in paragraph 21, wherein synchronization parameters are updated.

37. The synchronization system as defined in paragraph 36, wherein synchronization parameters are integrated over time.

38. The synchronization system as defined in paragraph 21, wherein synchronization parameters include global synchronization parameters and local synchronization parameters.

39. The synchronization system as defined in paragraph 38, wherein global synchronization parameters include the average time delay on the network.

40. The synchronization system as defined in paragraph 21, wherein synchronization parameters take into account bus dual-redundancy within the network.

41. A method of packet synchronization at a given receiver terminal within a packet-switched communication network comprising a plurality of terminals, the method comprising the steps of:

establishing the identity of the originating transmitter for an incoming packet of information;

if synchronization parameters corresponding to the identified transmitter are available, accessing said synchronization parameters, adjusting receiver based on synchronization parameters and decoding incoming packet of information;

if synchronization parameters corresponding to the identified transmitter are not available, detecting packet synchronization parameters associated with identified transmitter and storing the detected synchronization parameters.

42. A method of packet synchronization within a packet-switched communication network comprising a plurality of terminals, the method comprising the steps of:

detecting synchronization parameters associated with all transmitter-receiver terminal pairs within the network and storing the detected synchronization parameters; and

for a given receiver terminal,

establishing the identity of the originating transmitter for an incoming packet of information;

accessing synchronization parameters corresponding to the identified transmitter;

adjusting receiver based on accessed synchronization parameters; and

decoding incoming packet of information.

It will also be understood that the reference to 1553 and non 1553 signals in the above paragraphs can be replaced by a more general reference to signals encoded using different coding schemes, wherein 1553 and non-1553 signals are but merely one example.

Although the present invention has been described in considerable detail with reference to certain preferred embodiments thereof, other versions are possible. Therefore, the spirit and scope of the appended claims should not be limited to the description of the preferred embodiments contained herein.

**Claims**

1. An interference cancellation system for use within a communication system wherein a data bus carries primary signals having a first component encoded in accordance with a first signaling scheme and a second component encoded in accordance with a second signaling scheme, comprising:

   an input port for receiving a sampled primary signal from the data bus;

   a data extraction block connected to said input port, for extracting from said sampled primary signal data encoded in accordance with said first signaling scheme and for outputting said data in decoded form; and an interference cancellation circuit comprising:

   an interference measurement block for receiving said decoded data and said sampled primary signal and for producing an interference signal; and
   a cancellation block for subtracting said interference signal from the sampled primary signal to produce an output signal.

2. An interference cancellation system as claimed in claim 1, wherein the interference measurement block comprises an accumulate basis function block, for receiving said decoded bit stream, said word timing and said sampled primary signal, and for extracting basis function representations of said first signaling scheme in a frequency band outside a frequency band occupied by said first signaling scheme.

3. An interference cancellation system as claimed in claim 1 or 2, wherein said interference measurement block comprises an accumulate basis functions block for extracting samples of the first component from said sampled primary signal, based on identifying predefined basis functions within a decoded bit stream formed by said decoded data.

4. An interference cancellation system as claimed in claim 3, wherein said accumulate basis functions block has a plurality of averaging buffers associated with said predefined basis functions, for accumulating said extracted samples.

5. An interference cancellation system as claimed claim 4, wherein within each said averaging buffer said accumulated extracted samples are integrated over a predetermined period of time.

6. An interference cancellation system as claimed in claim 3, 4 or 5, wherein the interference measurement block further comprises a first resampler block for time aligning said samples of the first component extracted from said sampled primary signal prior to extraction within the accumulate basis function block.

7. An interference cancellation system as claimed in any one of claims 3 to 6, wherein the interference measurement block further comprises a synthesis block for synthesizing an interference signal for said first signaling scheme based on said accumulated basis functions and said decoded bit stream.

8. An interference cancellation system as claimed in any preceding claim, further comprising means for storing interference cancellation parameters $IC_{1553Txi}$ associated with primary signals incorporating components of said first signaling scheme transmitted by a transmitter Txi within the communication system conforming to said first signaling scheme.

9. An interference cancellation system as claimed in any preceding claim electrically connected to both a primary data bus and a redundant data bus, for enabling interference cancellation for dual redundant data communication of data in accordance with said second signaling scheme.

10. An interference cancellation system as claimed in claim 1, wherein said interference measurement block comprises an impulse response block for producing an interference signal based on an impulse response system model for said first signaling scheme; and said cancellation block producing an output signal with the component from said first signaling scheme substantially cancelled.

11. The interference cancellation system of claim 10, wherein said interference measurement block further comprises an accumulate basis functions block for accumulating basis functions and wherein said impulse response block

comprises an extract IR coefficients block for calculating impulse response coefficients **w** based on said accumulated basis functions.

12. An interference cancellation system as claimed in claim 11, wherein said extract IR coefficients block comprises means for calculating impulse response coefficients w based on a matrix equation $\psi_w = \phi$, wherein $\psi$ is an invertible matrix constructed based on predefined 1553 symbol sequences that have associated basis functions, and $\phi$ is a vector of said associated basis functions.

13. An interference cancellation system as claimed in claim 12, wherein said matrix $\psi$ is constructed such that it has a pseudoinverse that is a constant multiplied by the transpose of matrix $\psi$.

14. An interference cancellation system as claimed in claim 11, 12 or 13, wherein said extract IR coefficients block comprises means for calculating impulse response coefficients **w** based on a circular deconvolution.

15. An interference cancellation system as claimed in any preceding claim, wherein said first signaling scheme is a narrow-band scheme, and said second signaling scheme is a broadband signaling scheme.

16. An interference cancellation system as claimed in any one of claims 1 to 14, wherein said first signaling scheme conforms to military standard 1553.

17. A method of canceling interference signals wherein data encoded in accordance with a first signaling scheme is overlaid on data encoded in accordance with a second signaling scheme, comprising:

    acquiring from a data bus a sampled primary signal, the sampled primary signal comprising data encoded in accordance with said first and second signaling schemes;
    decoding the data encoded according to said first signaling scheme within the sampled primary signal to produce a decoded data;
    producing a variant of an interfering signal based on the decoded data and based on the sampled primary signal using an impulse response modeling technique;
    subtracting the variant of said interfering signal from the sampled primary signal and producing an output signal with a substantially attenuated component from said first signaling scheme.

18. Within a 1553 data communication system having a primary data bus and a redundant data bus, a non-1553 data communication overlay system comprising:

    a non-1553 bus controller terminal and a non-1553 remote terminal, wherein each non-1553 terminal includes:

        a non-1553 transmitter block connected to the primary bus and the redundant bus for sending non-1553 signals;
        a non-1553 receiver block for receiving non-1553 signals; and
        a non-1553 receive path selection block for selectively establishing a receive path between the primary data bus or the redundant data bus and the non-1553 receiver block according to predefined receive path selection criteria.

19. Within a packet switched communication network comprising a plurality of terminals for sending and receiving packets of information, a synchronization system comprising:

    a transmitter-identification system for communicating to each receiving terminal within the network the identity of the originating transmitter terminal for a given packet of information, said communication of the transmitter identity occurring prior to the reception of the given packet of information;
    a packet-boundary detection system for enabling detection of packet synchronization parameters for all transmitter-receiver pairs of terminals within the network; and
    a storage-access system for storage of detected packet synchronization parameters and for allowing access by the receiver within the corresponding transmitter-receiver pair to access said packet synchronization parameters.

**FIGURE 1**

FIGURE 2

EP 1 883 193 A2

```
┌─────────────────────────────┐
│   Measure performance of    │          ⌒ 61
│  primary bus and redundant  │
│            bus              │
└─────────────────────────────┘
              │
              │            ⌒ 62
              ▼
┌─────────────────────────────┐
│                             │
│ Selecting the non-1553 receive path │
│                             │
└─────────────────────────────┘
              │
              │                  ⌒ 63
              ▼
┌─────────────────────────────┐
│                             │
│ Connecting to either the primary or the │
│ redundant path according to selected non- │
│      1553 receive path      │
│                             │
└─────────────────────────────┘
```

FIGURE 3

FIGURE 4

EP 1 883 193 A2

70

1553b Transmitter

21

Host
Interface → Controller → Encoder → AFE — Manchester
Signaling — Bus A

31

Bus B

75

1553b Receivers

81

Host
Interface ← Controller ← Decoder ← AFE — Manchester
Signaling — Bus A — 21

82

Host
Interface ← Controller ← Decoder ← AFE — Manchester
Signaling — Bus B — 31

85

FIGURE 5

FIGURE 6

FIGURE 7

FIGURE 8

FIGURE 9

FIGURE 10

FIGURE 11

**1553b Signal,$S_1$ - LP Band**

**FIGURE 12A**

FIGURE 12B

OFDM Signal + 1553b Sidelobes, $S_3$ - HP Band

FIGURE 12C

OFDM Signal with 1553b Sidelobes Cancelled, $S_4$ - HP Band

**FIGURE 12D**

EP 1 883 193 A2

FIGURE 13

1210

1212          1214          1216          1218

```
            ┌──────────┐  ┌──────────┐  ┌──────────┐  ┌──────────┐
───────────▶│   SYNC   │─▶│   Data   │─▶│ Symbol/  │─▶│  Clock   │──────────────▶  Clock Error Estimate
            │ Detector │  │ Demodul  │  │  Word    │  │  Error   │
            │          │  │   ator   │  │  Timing  │  │ Estimato │
            │          │  │          │  │ Estimato │  │    r     │
            │          │  │          │  │    r     │  │          │
            └──────────┘  └──────────┘  └──────────┘  └──────────┘
                                                                  ─────────────▶  Word Timing

                                                      ───────────────────────────▶  Decoded Bit Stream
```

FIGURE 14

Transmitted Basis Function [0 0 0]

Transmitted Basis Function [0 0 1]

FIGURE 15A

FIGURE 15B

FIGURE 15C

FIGURE 16

EP 1 883 193 A2

51

EP 1 883 193 A2

Primary
bus

Redundant
bus

151

152

170

140

Non-1553
Receiver

Non-1553
Receive Path
Selection

IC

FIGURE 17

**FIGURE 18A**

EP 1 883 193 A2

230-B    170

Second Sampled
Primary Signal, **S₃**

Resample #1

238-B1

+  −

Resample #2

238-B2

to non-1553 RX

1553 IS, $y(n)$

Error signal

237

Generate
Reference

$x(n)$

239-B

LMS
Block

1553 Decoded
Bit Stream, **S₂**

**FIGURE 18B**

230-C    170

Second Sampled
Primary Signal, **S₃**

Resample #1

238-C1

+  −

+

to non-1553 RX

1553 IS, $y(n)$

Error signal

Generate
Reference

$x(n)$

239-C

LMS
Block

Resample #2

238-C2

1553 Decoded
Bit Stream, **S₂**

**FIGURE 18C**

Command and status sync (data sync is -1 times this)

Data 1

Data 0

**FIGURE 19**

EP 1 883 193 A2

**FIGURE 20A**

**FIGURE 20B**

EP 1 883 193 A2

FIGURE 20C

**FIGURE 21**

EP 1 883 193 A2

Command and status sync (data sync is -1 times this)

Data 1                    Data 0

**FIGURE 22**

EP 1 883 193 A2

**FIGURE 23A**

**FIGURE 23B**

**FIGURE 23C**

EP 1 883 193 A2

**FIGURE 24A**

**FIGURE 24B**

**FIGURE 24C**

**FIGURE 25**

**FIG. 26**

EP 1 883 193 A2

FIG. 27

```
                    ┌─────────────────────────────┐
                    │ @given Rx:establish originating TX │      ╲ 3200
                    │ ID for incoming packet      │      ╱
                    └─────────────────────────────┘
                                  │
                              ╱───┴───╲
                            ╱  sync params ╲      ╲ 3210
        ┌──────────────────╲               ╱──────────────────┐
        │                   ╲  available  ╱                   │
        │                     ╲─────────╱                     │
        │                                                     │
┌───────┴─────────────┐                           ┌──────────┴─────────┐
│ access sync params  │   ╱ 3212                   │ detect sync params │   ╱ 3222
│ and adjust RX       │                           │                    │
└───────┬─────────────┘                           └──────────┬─────────┘
        │                                                     │
┌───────┴─────────────┐                           ┌──────────┴─────────┐
│ decode packet       │   ╱ 3214                   │ store sync params  │   ╱ 3224
└───────┬─────────────┘                           └──────────┬─────────┘
        │                                                     │
┌───────┴─────────────┐                                      │
│║ update sync        ║│   ╱ 3216                             │
│║ params             ║│                                      │
└───────┬─────────────┘                                      │
        └──────────────────────────┬──────────────────────────┘
                                    │
```

FIG. 28A

3300 detect sync params for all TX-RX pairs

3310 store all sync params

3320 establish originating TX ID for incoming packet

3330 access sync params and adjust RX

3340 decode incoming packet

3350 update sync params

for given RX

FIG. 28B

FIG. 29A

EP 1 883 193 A2

FIG. 29B

FIG. 29C

FIG. 30A

BC receiver timing view

Superframe

Beacon packet

BC | Schedule

synch period

$2t_1$ | RT1 | BC/RT0 | $2t_2$ | RT2 | BC | Schedule | ...

RT1 receiver timing view

BC | Schedule | RT1 | BC/RT0 | $t_2 + t_3 - t_1$ | RT2 | ... | BC | Schedule | ...

RT2 receiver timing view

BC | Schedule | $t_1 + t_3 - t_2$ | RT1 | BC/RT0 | RT2 | BC | Schedule | ...

FIG. 30B

70

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 11332395 B